# EUROPÄISCHE PATENTSCHRIFT

(11) **EP 4 054 303 B1**
(45) Veröffentlichungstag und Bekanntmachung des Hinweises auf die Patenterteilung: **24.07.2024**
(21) Anmeldenummer: 20800895.3
(22) Anmeldetag: 03.11.2020
(51) Int. Cl.: A01B 5/14, A01B 9/00, A01B 15/10, A01B 49/02, A01B 15/16, A01B 13/08

(54) **PFLUGMODUL MIT LOCHPLATTE**
PLOUGH MODULE HAVING A PERFORATED PLATE
MODULE DE CHARRUE À PLAQUE PERFORÉE

(30) Priorität: 07.11.2019 DE 102019217245
(43) Veröffentlichungstag der Anmeldung: 14.09.2022
(73) Patentinhaber: Huber Soil Solution GmbH, 8435 Wagna (AT)
(72) Erfinder: HUBER, Franz-Ferdinand, 8430 Wagna (AT)
(74) Vertreter: Leske, Thomas
(86) Internationale Anmeldenummer: PCT/EP2020/080784
(87) Internationale Veröffentlichungsnummer: WO 2021/089525

(56) Entgegenhaltungen:
- WO-A1-2020/193537
- DE-A1- 102017 102 683
- DE-A1- 3 541 490
- GB-A- 1 385 951

## Beschreibung

Die vorliegende Erfindung betrifft ein Pflugmodul zur auswechselbaren Montage an einem Grundgerüst einer Pflugvorrichtung zum Pflügen eines Bodens gemäß Oberbegriff des Anspruchs 1 sowie gemäß Anspruch 17 eine Pflugvorrichtung, die mit zumindest einem derartigen Pflugmodul ausgerüstet ist.

Beim Pflügen mit einer derartigen Pflugvorrichtung, die üblicherweise von einem Traktor gezogen wird, werden aus dem Boden sogenannte Erdbalken herausgeschnitten. Ein Erdbalken weist einen Seitenbereich auf, entlang welchem ein erstes Schneidelement schneidet bzw. geschnitten hat. Ferner weist der Erdbalken einen Bodenbereich auf, welcher die beiden Seitenbereiche verbindet und mittels eines zweiten Schneidelements von dem Boden getrennt wird. Entsprechend weist der Boden an dem Bodenbereich des Erdbalkens eine Trennfläche auf (sog. Furchensohle). Aus dem Boden wird somit ein ungefähr rechteckiger Erdbalken herausgeschnitten, wobei eine horizontale Schnittebene (=Furchensohle) mittels des zweiten Schneidelements und eine vertikale Schnittebene (=Furchenwand) mittels des ersten Schneidelements an dem Restboden entsteht. Durch das Herausschneiden des Erdbalkens wird im Boden eine Furchenwand gebildet, von welcher der Seitenbereich des Erdbalkens gelöst wurde. Der Bodenbereich definiert somit zum Zeitpunkt des Trennens von dem Boden die vertikal unterste Fläche des Erdbalkens.

Es wird darauf hingewiesen, dass die Begriffe "horizontal" und "vertikal" sowie "oben" und "unten" sich auf Anordnungen und Ausbildungen der Pflugvorrichtungen und damit des an diesen befestigten erfindungsgemäßen Pflugmoduls beziehen, wobei die Pflugvorrichtung bestimmungsgemäß auf dem Boden aufliegend und im Pflügbetrieb entlang der Bearbeitungsrichtung bewegbar betrachtet wird.

In GB 1 385 951 A ist eine Bodenaushubvorrichtung insbesondere für Straßenbau und deren Instandhaltung beschrieben. Die bekannte Vorrichtung weist zwei Schneidelemente auf, welche an entsprechenden Armen bezüglich ihrer Arbeitsebene im Wesentlichen rechtwinklig zueinander angeordnet sind. Das eine Schneidelement ist schüsselförmig ausgebildet und um eine durch die Nabe verlaufende Rotationsachse rotierbar und dient dem Ausheben von Boden und dem anschließenden seitlichen Ablegen. Das zweite Schneidelement ist als eine ebene Scheibe ausgebildet und dient dem Ausbilden der Ränder von Straßen. Das erste, schalenförmig ausgebildete Schneidelement ist an einem Arm mittels eines dazu schwenkbaren Lagers befestigt. Dadurch kann die Schneidkante des schalenförmigen Schneidelementes hinsichtlich eines optimalen Winkels für den Materialaushub eingestellt werden. Es ist auch eine seitliche Bewegung in Richtung des rechten Winkels möglich, so dass bezüglich der Antriebswelle für das schalenförmige Schneidelement ein Versatz für den Materialaushub möglich ist.

In DE 3541490 A1 ist eine Bodenbearbeitungsmaschine beschrieben, welche um aufwärts gerichtete Achsen antreibbare Bodenbearbeitungswerkzeuge aufweist. Die Bodenbearbeitungswerkzeuge sind als Untergrundlockerungseinrichtungen ausgebildet, um die unteren Schichten des Bodens intensiv zu bearbeiten, aufzubrechen und insgesamt zu lockern. Diese Untergrundlockerungswerkzeuge folgen in Pflügrichtung davor angeordneten Scheibensechen, welche dafür vorgesehen sind, den Boden aufzutrennen. Diese bekannte Bodenbearbeitungsmaschine ist zum Lockern des Bodens, nicht aber zum Herausschneiden und Wenden eines Erdbalkens aus einem zu pflügenden Bodenbereich vorgesehen. Die bekannte Bodenbearbeitungsmaschine ist aufgrund der Tatsache, dass unter der Oberfläche liegende Bodenstrukturen gelockert werden können, insbesondere auch dafür geeignet, den Boden zu lockern, auch wenn in dem zu lockernden Bodenbereich bereits Pflanzen wachsen.

Eine einschlägige Pflugvorrichtung ist aus DE 10 2017 102 683 A1 bekannt. Am Grundgerüst dieser Pflugvorrichtung ist ein rotierbares, als Schneidteller ausgebildetes erstes Schneidelement mit einer umlaufenden ersten Schneidkante angeordnet, wobei das erste Schneidelement derart ausgebildet ist, dass durch Bewegen der Pflugvorrichtung auf dem Boden entlang einer Pflügrichtung ein Seitenbereich eines Erdbalkens des Bodens abschneidbar ist. Die Pflügrichtung oder Bearbeitungsrichtung ist definiert als die Richtung, entlang welcher die Pflugvorrichtung über dem Boden verfahren wird. Ein zweites, ebenes Schneidelement mit einer zweiten Schneidkante ist ebenfalls am Grundgerüst befestigt und ist in Pflügrichtung vor dem ersten Schneidelement angeordnet. Das zweite Schneidelement ist derart ausgebildet ist, dass durch Bewegen des Pflugmoduls auf dem Boden entlang einer Pflügrichtung der Bodenbereich des Erdbalkens abschneidbar ist. Beim Pflügen mit dieser Pflugvorrichtung wird zunächst der Bodenbereich eines zu bildenden Erdbalkens mittels des zweiten Schneidelements geschnitten. Das nachfolgende erste Schneidelement, das als bombierter Schneidteller ausgebildet ist, schneidet anschließend einen Seitenbereich des Erdbalkens und legt diesen gewendet in der gebildeten Furche ab. Eine derartige Pflugvorrichtung erfordert gegenüber konventionellen Pflügen mit Pflugkörpern und Streichblechen eine deutlich verringerte Zugkraft.

Von Nachteil bei einer Pflugvorrichtung gemäß DE 10 2017 102 683 A1 ist, dass die verschiedenen Schneidelemente einzeln am Grundgerüst montiert sind, was eine Montage oder Nachrüstung an einem konventionellen Grundgerüst für Pflüge schwierig macht. Zudem ist die räumliche Ausrichtung der beiden Schneidelemente zueinander kompliziert und deren Einstellung bzw. Verstellung oft nur in geringem Umfang möglich. Des Weiteren ist bei der bekannten Pflugvorrichtung eine Anpassung an unterschiedliche Böden nicht möglich, so dass bei wechselnden Böden das Pflügergebnis nicht optimal an jeweilige Böden angepasst ist.

Aufgabe der Erfindung ist es, eine Baueinheit bereitzustellen, bei welcher zu einem Pflugmodul zusammengefasste Schneidelemente beim Pflügen Erdbalken von dem zu pflügenden Boden abtrennen und wenden, welches an einem Grundgerüst einer Pflugvorrichtung ausgetauscht bzw. montiert werden kann und ein leichtzügiges Pflügen ermöglicht und welches leicht an veränderte Bodenbeschaffenheiten angepasst werden kann.

Die Aufgabe wird einerseits mit einem Pflugmodul mit den Merkmalen gemäß Anspruch 1 und andererseits mit einer Pflugvorrichtung mit den Merkmalen gemäß Anspruch 17 gelöst. Zweckmäßige Weiterbildungen sind in den jeweiligen abhängigen Ansprüchen definiert.

Diese Aufgabe wird gelöst, indem das Pflugmodul als fertigmontierte Baueinheit ausgebildet ist und mit einer ersten Trägerstruktur, an der das erste Schneidelement angeordnet ist, und mit einer zweiten Trägerstruktur versehen ist, an der das zweite Schneidelement angeordnet ist, d. h. die jeweilige Trägerstruktur das jeweilige Schneidelement trägt, und die beiden Trägerstrukturen miteinander verbunden sind, und dadurch, dass die erste Trägerstruktur Mittel zur lösbaren Befestigung an einem Grundgerüst einer Pflugvorrichtung aufweist, bei welcher ein Pflugmodul als fertigmontierte Baueinheit derart ausgebildet ist, dass im montierten Zustand das zweite Schneidelement in Pflügrichtung nach dem ersten Schneidelement angeordnet ist. Das erste Schneidelement ist um zwei voneinander verschiedene Achsen schwenkbar und sein gewünschter Schwenkwinkel und/oder sein Anschnittwinkel einstellbar.

Gemäß einem ersten Aspekt der vorliegenden Erfindung wird das Pflugmodul für eine Pflugvorrichtung zum Pflügen eines Bodens beschrieben. Das Pflugmodul weist eine erste Trägerstruktur auf, an der ein rotierbares Schneidelement, z. B. eine bombierte Scheibe angeordnet ist. Ein zweites Schneidelement, z. B. eine weitere, zum ersten Schneidelement in einem definierten Winkel angeordnete Scheibe oder ein Schneidmesser, ist auf einer zweiten Trägerstruktur montiert, die ihrerseits fest mit der ersten Trägerstruktur verbunden ist. Das rotierbare erste Schneidelement weist eine umlaufende erste Schneidkante auf und ist derart ausgebildet, dass bei Bewegen der Pflugvorrichtung mit der Trägerstruktur auf dem Boden entlang von deren Pflügrichtung, d. h. der Bearbeitungsrichtung, ein Seitenbereich eines Erdbalkens des Bodens, insbesondere von einer Furchenwand, mittels eines ersten Schneidbereichs der ersten Schneidkante abgeschnitten wird. Die erste und die zweite Trägerstruktur sind fest miteinander verbunden und sind gemeinsam über die erste Trägerstruktur an der Grundstruktur der Pflugvorrichtung angeordnet. Das zweite Schneidelement weist eine zweite Schneidkante auf, wobei das zweite Schneidelement an der zweiten Trägerstruktur angeordnet ist und derart ausgebildet ist, dass bei Bewegen des Pflugmoduls auf dem Boden entlang der Pflügrichtung ein Bodenbereich eines Erdbalkens des Bodens, insbesondere entlang einer Trennfläche zwischen Erdbalken und Pflügsohle, mittels eines zweiten Schneidbereichs der zweiten Schneidkante abschneidbar ist. Im montierten Zustand ist das zweite Schneidelement ist relativ zu dem ersten Schneidelement in Pflügrichtung derart angeordnet, dass der zweite Schneidbereich in Pflügrichtung hinter dem ersten Schneidbereich liegt.

Erfindungsgemäß sind beide Schneidelemente einzeln oder gemeinsam in ihrer jeweiligen Position hinsichtlich ihrer Schneidaufgabe zum Erdreich verstellbar, so dass der jeweilige Eingriffswinkel gewählt werden kann. Die Bodenbeschaffenheit wie Bodenstruktur, Lehm- oder Sandgehalt variieren von zu pflügendem Boden zu pflügendem Boden teilweise erheblich. Ein wesentlicher Vorteil des erfindungsgemäßen Pfluges besteht darin, dass gegenüber herkömmlichen Pflügen die erforderliche Zugkraft bei gleichzeitig verbesserter Pflügung und Krümelung des Bodens die Zugkraft verringert werden kann. Dies ist in höchstem Maße auch ein ökologischer Aspekt, da bei verringerter Zugkraft weniger Kraftstoff erforderlich ist. Messungen haben ergeben, dass je nach Boden bis zu 25 % verringerte Zugkraft mit dem erfindungsgemäßen Pflug möglich sind. Daher ist für den erfindungsgemäßen Pflug vorgesehen, dass das erste Schneidelement um zwei unterschiedliche Drehachsen verschwenkbar ausgebildet ist. Das erste Schneidelement ist dabei um eine in Richtung auf den zu pflügenden Boden gerichtete Achse schwenkbar. Die Bewegung des Schneidelementes um die insbesondere in senkrechter Richtung auf den Boden weisende Schwenkachse bedeutet, dass das erste Schneidelement bzgl. seines Anschnittwinkels schwenkbar und außerdem auch auf einen gewünschten Anschnittwinkel einstellbar ist. Eine derartige Bewegung entspricht bei einer Bewegung eines Körpers beispielsweise im Wasser einer Gierbewegung. Eine zweite Bewegungsmöglichkeit des ersten Schneidelementes ist dadurch vorgesehen, dass das erste Schneidelement um eine Achse, welche in Pflügrichtung weist, schwenkbar bzgl. seines Schwenkwinkels ist. Auch dieser Schwenkwinkel ist einstellbar, und zwar auf jeden gewünschten Wert je nach Bodenbeschaffenheit. Im Vergleich zur Bewegung eines Körpers im Wasser wäre das eine sogenannte Rollbewegung. Beide Bewegungen des ersten Schneidelementes, d. h. eine Bewegung um eine Achse in Pflügrichtung und des Weiteren eine Bewegung um eine senkrecht zur Pflügrichtung und senkrecht auf den zu pflügenden Boden gerichteten Achse, sind einzeln oder auch gemeinsam möglich, d. h. auch einstellbar.

Zusätzlich ist gemäß einem Ausführungsbeispiel vorzugsweise vorgesehen, dass das zweite Schneidelement um eine Achse, welche senkrecht zur Pflügrichtung und im Wesentlichen parallel zum Furchenboden verläuft, einstellbar verschwenkbar ist. Damit kann erreicht werden, dass das zweite Schneidelement durch einen Anstellwinkel zur Furchensohle einerseits die Tiefe der Furchensohle im Boden und andererseits die Einziehkraft des Pfluges in den Boden bestimmt.

Der wesentliche Vorteil des erfindungsgemäßen Pfluges gegenüber einem herkömmlichen Pflug mit einer herkömmlichen Pflugschar besteht darin, dass bei einer herkömmlichen Pflugschar die Furchenseite und die Furchensohle von einem einzigen Element geschnitten und der dabei erhaltene Erdbalken gewendet wird, bei welchem das Element durch seine Krümmung in einem Zuge von einem im Wesentlichen senkrecht beginnend ausgerichteten Seitenwandbereich zu einem im Wesentlichen waagerechten Bereich der Furchensohle übergeht. Gemäß der Erfindung werden nun diese beiden geschnittenen Bereiche, d. h. der Bereich für die Furchenwand und der Bereich für die Furchensohle von separaten Schneidelementen erzeugt, so dass sozusagen der herkömmliche Pflug in zwei unterschiedliche Schneidelemente getrennt ist. Erst dadurch, dass diese beiden Elemente separat sind, ist die separate Einstellung der jeweiligen Schneidelemente die Grundlage für eine extrem hohe Flexibilität und Optimierung und Anpassung des neuartigen erfindungsgemäßen Pfluges zur weiteren Reduzierung der Zugkraft bei unterschiedlichen Bodenbeschaffenheiten.

Vorzugsweise sind die jeweiligen Schneidelemente an dem Pflugmodul bezüglich ihrer Position zueinander verstellbar, vorzugsweise schwenkbar. Dies stellt einen deutlichen Vorteil gegenüber den bekannten Pflugvorrichtungen dar. So kann beispielsweise ein Pflugmodul verwendet werden, bei welchem das erste Schneidelement für die Seitentrennung des Erdbalkens vor dem zweiten Schneidelement für die Bodentrennung des Erdbalkens angeordnet sein. Es ist aber auch möglich, dass beide Schneidelemente im Rahmen der freien Verstellung zueinander beispielsweise gleichzeitig in z-Richtung synchron zueinander verstellt werden. Eine derartige Verstellung ist beispielsweise dann erforderlich, wenn die Pflügtiefe aufgrund von Bodenbeschaffenheit oder sonstiger Gegebenheiten verändert werden soll. Das bedeutet, dass die Dicke des Erdbalkens von der Oberseite der Erde bis zur Furchensohle verändert werden kann.

Vorzugsweise weist eine Pflugvorrichtung, welche einen zweiten Aspekt der Erfindung darstellt, mehrere Pflugmodule auf, beispielsweise drei bis acht Module auf einer Pflugseite, d. h. bezogen auf ein Grundgerüst sechs bis 16 Module insgesamt. Bei den bekannten Pflugvorrichtungen ist das erste Schneidelement zum Schneiden der Seite eines Erdbalkens hinter dem zweiten Schneidelement angeordnet, welches den Boden eines Erdbalkens bzw. einer Furche, aus welchem der Erdbalken geschnitten wird, schneidet. Diese bekannte Anordnung ist offensichtlich gewählt worden, weil das erste Schneidelement im Zusammenwirken beispielsweise mit einem Leitblech oder in einer Ausgestaltung als Hohlscheibe für das Wenden des herausgeschnittenen Erdbalkens zuständig ist. Dazu muss die Sohle einer Furche, d. h. die untere Seite eines Erdbalkens bereits geschnitten sein. Daher wurde bei den bekannten Einrichtungen das zweite Schneidelement bezüglich seiner aktiven Schneide vor dem ersten Schneidelement angeordnet. Durch diese Anordnung kann das erste Schneidelement nach seinem Schneiden der Seitenwand des Erdbalkens diesen unmittelbar wenden, da die Furchensohle ja bereits geschnitten ist. Damit das erste Schneidelement zuverlässig die Seite schneiden kann oder in einer gekrümmten Ausbildung auch den Erdbalken zum Wenden vorbereiten und das Wenden initiieren kann, muss natürlich der Antrieb bzw. die Lagerung bzw. die Halterung des ersten Schneidelementes auf dessen Rückseite vorgesehen sein. Das wiederum bedeutet aber, dass das zweite Schneidelement das erste Schneidelement jeweils gesonderte Träger aufweisen müssen, mittels welcher sie an dem Gerüst angebracht sind. Damit wird eine Einstellung der beiden Schneidelemente zueinander erheblich erschwert.

Demgegenüber ist bei der vorliegenden Erfindung das erste Schneidelement, welches die Seite des Erdbalkens schneidet, vor dem zweiten Schneidelement angeordnet, welches die Bodenfläche des Erdbalkens bzw. der Furche schneidet. Normalerweise wird dies nicht in Betracht gezogen, weil eine Pflugvorrichtung, bei welcher in Zugrichtung zuerst das erste Schneidelement zum Schneiden der Seite des Erdbalkens angeordnet ist, nicht auch noch die Funktion des Wendens ausführen kann, obwohl die Form als Hohlscheibe ausgebildet ist und prinzipiell zum Wenden des Erdbalkens vorgesehen ist. Denn der Furchenboden wurde ja noch nicht geschnitten. Darin besteht gerade der Vorteil des erfindungsgemäßen Moduls, dass nur zwei Schneidelemente, ohne dass ein Leitblech oder Streichblech erforderlich ist, vorgesehen sein müssen. Der Vorteil gemäß der Erfindung besteht nun auch darin, dass aufgrund der Tatsache, dass das erste Schneidelement an seiner Rückseite den Antrieb bzw. die Lagerung bzw. die Trägerstruktur aufweist und bei einer Anordnung vor dem zweiten Schneidelement, welches eine Trägerstruktur ebenfalls aufweist, die beiden Trägerstrukturen von dem ersten Schneidelement und von dem zweiten Schneidelement miteinander verbunden werden können, so dass ein Modul entsteht, welches mit einer einzigen Aufhängung am Trägergerüst der Pflugvorrichtung angebracht werden kann. Der entscheidende Vorteil besteht darin, dass eine herkömmliche Pflugvorrichtung mit Pflugkörpern umgebaut werden kann, und zwar ohne größeren Aufwand, indem die Pflugkörper demontiert und ein entsprechendes Modul montiert werden. Selbstverständlich können die herkömmlichen Grundgerüste, Pflugbäume auch genannt, gleich werksseitig mit den erfindungsgemäßen Pflugmodulen versehen werden.

In überraschender Weise hat sich nun gezeigt, dass bei einer Pflugvorrichtung mit vorlaufendem ersten Schneidelement als Hohlscheibe ein Schneiden des Seitenbereiches möglich ist, ohne dass zunächst ein Wenden sich anschließt, da der Furchenboden noch nicht geschnitten ist. Dies erledigt erst das nachlaufende zweite Schneidelement. Wenn bei einer Pflugvorrichtung mehrere derartige Module hintereinander angeordnet sind, so hat sich gezeigt, dass schon beim, in Pflügrichtung gesehen, ersten Modul folgenden zweiten Modul das erste Schneidelement nicht nur die dort vorhandene Seitenfläche des Erdbalkens schneidet, sondern dass dort bereits durch das erste Modul die Bodenfurche geschnitten ist. Damit kann vom zweiten Modul die gewünschte Funktion unmittelbar ausgeübt werden, nämlich dass das erste Schneidelement in Form einer Hohlscheibe die Seitenfläche des Erdbalkens schneidet und gleichzeitig den Erdbalken wenden kann.

Durch die hinsichtlich des Anschnittwinkels und des Schwenkwinkels einstellbare Lageveränderung des ersten Schneidelementes bei dessen Schwenken um eine Achse in Pflügrichtung und des Weiteren oder anstelle eines solchen Schwenkens um eine Achse senkrecht auf den Boden weisend kann das erste Schneidelement hinsichtlich verschiedener Bodenbeschaffenheiten und in Verbindung mit den Bodenbeschaffenheiten auf eine optimal niedrige Zugkraft eingestellt werden. Dies ist generell bei herkömmlichen Pflugscharen nicht möglich, weil die Zusammenfassung beider Schneidaufgaben, das Scheiden der Seitenfläche und das Schneiden der Furchensohle zu einem einzigen Element, nämlich der Pflugschar, immer einen Kompromiss darstellt, welcher, bezogen auf die erforderliche Zugkraft, schlechter ist als ein optimiertes Eingreifen und optimiertes Durchführen der jeweiligen Einzelfunktion des jeweiligen Schneidelementes.

Hinsichtlich der Konstruktion kann davon profitiert werden, dass die Halterung bzw. Trägerstruktur des ersten Schneidelementes nach hinten auf die Trägerstruktur für das zweite Schneidelement weist, so dass dort ein leichtes Anbringen und Verbinden der beiden Schneidelemente zu einem Modul möglich ist. Dies trifft auch auf die Aktuatoren zur Schwenkwinkel-, Anschnittwinkel bzw. Anstellwinkelverstellung der Schneidelemente zu. Wenn die Pflugvorrichtung beispielsweise nur ein Pflugmodul aufweist, dann wäre beim allerersten Zug beim Pflügen eines Feldes lediglich dieser allererste Zug ein Zug, bei dem die Seite des noch nicht freigeschnittenen Erdbalkens geschnitten wird, ein Wenden aber noch nicht stattfindet. Aber bereits beim zweiten Zug würde unmittelbar ein Wenden des seitlich dann abgeschnittenen Erdbalkens mittels des ersten Schneidelementes erfolgen, da das zweite Schneidelement dort in dem Bereich bereits die Furchensohle und damit die Unterseite des Erdbalkens abgeschnitten hätte. Es ergeben sich damit erhebliche Vorteile gegenüber den herkömmlichen Pflugvorrichtungen. Ein Auswechseln oder Umrüsten herkömmlicher Pflugvorrichtungen mit Pflugkörpern auf die erfindungsgemäßen Pflugmodule ist ohne Weiteres möglich. Es ist ohne Weiteres auch möglich, aufgrund der Modularität rasch Defekte oder wegen einer veränderten Bodenstruktur entsprechend angepasste andere Pflugmodule an der Pflugvorrichtung auszuwechseln oder bei Erkennen der Defekte eine unveränderte Schwenkwinkeleinstellung vorzunehmen, um diesen Defekten gegenzusteuern.

Besonders vorteilhaft ist das erfindungsgemäße Pflugmodul, wenn sowohl das erste als auch das zweite Schneidelement bezüglich ihrer Positionen einstellbar sind. Damit ergibt sich eine Einstellbarkeit auf den zu pflügenden Boden wie auch eine Einstellbarkeit der beiden Schneidelemente zueinander. Das zweite Schneidelement ist dabei schwenkbar an der Trägerstruktur, an welcher das um vorzugsweise zwei Achsen gleichermaßen schwenkbare erste Schneidelement befestigt ist, um die Neigung des zweiten Schneidelementes beim Durschneiden durch den Boden leicht nach unten zu richten, um ein Herausfahren dieses furchenbodenschneidenden Schneidelementes während des Pflügens zu verhindern und gleichzeitig das erste Schneidelement im Boden zu halten. Das erste Schneidelement ist in mehrere Richtungen schwenkbar und versetzbar, weist also mehrere Freiheitsgrade auf, um ein entsprechend optimales Pflügergebnis im Zusammenwirken der beiden Schneidelemente zueinander zu realisieren.

Das Vorsehen von mehreren Modulen an einer Pflugvorrichtung hat des Weiteren den Vorteil, dass eine größere Breite in einem Zug mit der erfindungsgemäßen Vorrichtung gepflügt werden kann. Es ist auch ein Außer-Eingriff-Schwenken von Schneidelementen dann sinnvoll, wenn der Rand eines zu pflügenden Feldes gepflügt wird und die Breite für den letzten Zug ansonsten zu groß wäre, dass die Gefahr bestünde, dass mit dem am Weitesten seitwärts angeordneten Pflugmodul eine Bodentrennung beispielsweise eines Stückes Boden durchgeführt wird, welches möglicherweise bereits beim Nachbarfeld wäre. Um dies zu vermeiden, kann durch Außer-Eingriff-Schwenken der bzw. des entsprechenden Schneidelementes eine derartige Situation verhindert werden.

Das erfindungsgemäße Pflugmodul ist über die Grundstruktur der Pflugvorrichtung an einer Zugmaschine, wie beispielsweise einen Traktor, gekoppelt, der somit die Schneidelemente entlang der Pflügrichtung durch den Boden zieht. Die Grundstruktur kann auch Teil eines Trageisens bzw. einer Grindel sein. Mit den Pflugmodulen, welche aus an zusammengefassten Trägerstrukturen angeordneten zwei Schneidelementen bestehen, nämlich einem ersten Schneidelement zum Schneiden der Seite eines Erdbalkens und zum Wenden sowie einem zweiten Schneidelement zum Schneiden der Furchensohle, kann auch auf Grindeln gänzlich verzichtet werden. Die Trägerstruktur weist Metallbalken und / oder Faserverbundelemente auf. Ferner können, wie weiter unten im Detail beschrieben ist, die angebrachten Elemente justierbar an der Trägerstruktur befestigt werden.

Der Pflugbaum bzw. das Trägergerüst, das aus der ersten und der zweiten Trägerstruktur gebildet ist, bietet somit eine starre, aber für ein Einstellen geeignete Befestigungsstruktur für die Schneidelemente an den Pflugmodulen sowie für zusätzliche Bauteile wie Gelenke oder Verstellelemente. Mit anderen Worten sind die Schneidelemente an der jeweiligen ersten oder zweiten Trägerstruktur derart fixiert, dass während des Pflügens keine Relativbewegung zwischen den Schneidelementen möglich ist. Wird beim Pflügen das zweite Schneidelement aufgrund des Schneidens des Erdbalkens in den Boden gedrückt, so wird gleichzeitig das erste Schneidelement in den Boden mittels einer Einzugskraft gedrückt. Vorzugsweise können die Schneidelemente aber auch während des Pflügens hinsichtlich ihrer einstellbaren Schwenkwinkel sowie beispielsweise auch ihrer Höhe zueinander verstellbar sein, was beispielsweise elektrisch oder hydraulisch erfolgen kann.

Gemäß einer beispielhaften Ausführungsform sind bzw. ist das erste und / oder das zweite Schneidelement schwenkbar, beispielsweise mittels eines Gelenks, an der jeweiligen Trägerstruktur befestigt, so dass der Winkel zwischen der Drehachse und der Erstreckungsrichtung der zweiten Schneidkante eingestellt und in einer gewünschten Position fixiert werden kann. In einer weiteren vorteilhaften Ausführungsform der Erfindung ist die zweite Trägerstruktur selbst über ein Gelenk schwenkbar mit der ersten Trägerstruktur verbunden. Hierdurch ist der Anstellwinkel des zweiten Schneidelements in Bezug auf die Pflügrichtung einstellbar. Der Anstellwinkel ist dabei üblicherweise so, dass die vorlaufende Schneidkante leicht nach unten in die Erde hineingerichtet ist.

In einer weiteren beispielhaften Ausführungsform ist das erste Schneidelement und / oder das zweite Schneidelement schwenkbar und / oder translatorisch verschiebbar an der jeweiligen Trägerstruktur angeordnet, um den Anstellwinkel und die Positionen zueinander einzustellen. Somit kann abhängig von der Bodenbeschaffenheit und abhängig von der gewünschten Bearbeitungstiefe und -intensität ein Anstellwinkel des zweiten Schneidelements in Bezug auf die Pflügrichtung eingestellt werden.

Eine Vorrichtung wie z. B. das oben beschriebene Gelenk dient zum Verstellen des Schneidelementwinkels (Teller-Scheibenwinkel) und ermöglicht die Einstellung des Schneidelement-Neigungswinkels (Vertikalneigung zur Furchenwand des Bodens) und des Schneidelement-Richtungswinkels (zur Pflügrichtung, d. h. zur Schlepperfahrrichtung). Die Schneidelinie des Schneidelements zwischen der ersten Schneidkante und der Furchenwand kann mittels einer verstellbaren Stütze höhenverstellt werden. Entsprechend kann der vertikale und/oder horizontale Abstand zwischen dem ersten Schneidelement und dem zweiten Schneidelement variabel eingestellt werden. Mit anderen Worten können in einer weiteren beispielhaften Ausführungsform das erste Schneidelement und das zweite Schneidelement derart zueinander angeordnet sein bzw. werden, dass der Schneidbereich der ersten Schneidkante des ersten Schneidelements von der zweiten Schneidkante des zweiten Schneidelement vertikal beabstandet ist. Mittels einer Verstellung in der horizontalen Richtung ist die Schnittbreite bzw. Pflügbreite eines Zuges einstellbar. Diese Verstellung in Breitenrichtung erfolgt vorzugsweise mittels eines Verstellelementes, welches vorzugsweise als Schubstange ausgebildet ist. Durch translatorisches Verschieben der Schubstange wird über geeignete Übertragungsglieder ein, bezogen auf das Grundgerüst, seitlicher Versatz der Pflugmodule und damit die Pflügbreite eingestellt bzw. erreicht. Die Schubstange ist vorzugsweise hydraulisch oder elektrisch vorzugsweise stufenlos verstellbar.

In Ausführung der Erfindung ist es bevorzugt, dass ein erster Schneidbereich innerhalb einer ersten Schneidebene und ein zweiter Schneidbereich in einer zweiten Schneidebene ausgebildet sind, wobei die erste Schneidebene und die zweite Schneidebene zueinander einen Winkel von 30° bis 135°, insbesondere 45° bis 110°, ausbilden. Die Einstellung des gewünschten Winkels kann hierfür dadurch erfolgen, dass die beiden Schneidelemente schwenkbar auf der jeweils zugehörigen Trägerstruktur gelagert sind. Selbstverständlich liegt auch eine vorgegebene, feste Ausrichtung der beiden Schneidebenen im Rahmen der Erfindung.

Die erste Schneidkante läuft dabei in einer ersten Schneidebene, während die zweite Schneidkante in einer zweiten Schneidebene verläuft. Das erste Schneidelement und das zweite Schneidelement sind dabei derart relativ zueinander an der Trägerstruktur befestigt, dass die erste Schneidebene und die zweite Schneidebene dabei nicht parallel ausgebildet sind und einen Winkel von insbesondere mehr oder weniger als 90° (Öffnungswinkel) zueinander aufweisen. Mit anderen Worten kann in einer weiteren beispielhaften Ausführungsform das erste Schneidelement derart angeordnet sein, dass zwischen der Drehachse des ersten Schneidelements und einer Erstreckungsrichtung der zweiten Schneidkante (bzw. eine Tangente an dem zweiten Schneidbereich, falls das zweite Schneidelement eine rotierende Scheibe ausbildet) ein Winkel von ungefähr 0° bis ungefähr ±30° Grad vorliegt. Insbesondere weist die Normale der ersten Schneidebene eine (Richtungs-) Komponente auf, welche parallel zu einer Horizontalrichtung ist, wenn die Pflugvorrichtung bestimmungsgemäß auf dem Boden aufliegt. Die Drehachse des Schneidelements ist insbesondere parallel zu der Normalen der ersten Schneidebene. Ferner weist die Normale der zweiten Schneidebene eine weitere (Richtungs-) Komponente auf, welche parallel zu einer Vertikalrichtung ist, wenn die Pflugvorrichtung bestimmungsgemäß auf dem Boden aufliegt. Ein Winkel zwischen den Normalen kann zwischen 45° Grad und 130° Grad beispielsweise ausgewählt werden, um ein gewünschtes Furchenbild im Boden zu erzielen.

Wenn die erste Schneidebene und die zweite Schneidebene insbesondere ca. 90° zueinander aufweisen, so drückt das zweite Schneidelement den unterschnittenen Erdbalken in Richtung des ersten Schneidelementes. Dies führt dazu, dass während der Bewegung in Pflügrichtung der Erdbalken zwischen dem ersten Schneidelement und dem zweiten Schneidelement vorteilhaft bearbeitet werden kann. Durch das Zusammenwirken beider rotierenden Maschinenelemente, d. h. dem ersten und zweiten Schneidelement wird ein bevorzugtes Pflügergebnis bzw. eine "Krümelung" (Schollenzerkleinerung) bereitgestellt. Außerdem wird der starke Seitenzug des ersten Schneideelements, der sich negativ auf die Schlepperzuglinie auswirkt, durch die Gegenwirkung des zweiten Schneideelements weitgehend kompensiert. Die Zugmaschine bleibt somit ohne großes Gegensteuern in der Spur.

Das erste Schneidelement ist rotierbar bzw. drehbar an der ersten Trägerstruktur befestigt. Entsprechend weist das erste Schneidelement eine erste Drehachse auf, um welche sich das erste Schneidelement dreht. Das erste Schneidelement ist bevorzugt als bombierter Schneidteller ausgebildet und weist eine kreisrunde Umfangslinie auf. Entlang der Umfangslinie ist die umlaufende erste Schneidkante ausgebildet. Mittels der ersten Schneidkante wird der Seitenbereich des Erdbalkens von der Furchenwand des Bodens getrennt und der Erdbalken zugleich seitlich abgeleitet. Die umlaufende erste Schneidkante weist einen ersten Schneidbereich auf. Der erste Schneidbereich ist derjenige Umfangsabschnitt der ersten Schneidkante, welcher in Pflügrichtung vorzugsweise als erstes in Kontakt mit dem Boden kommt und diesen schneidet. Das erste Schneidelement kann einen Durchmesser von ungefähr 500 mm bis ungefähr 800 mm aufweisen. Ferner kann das erste Schneidelement eine Zahnung aufweisen, zentral gelagert und in der Position gegenüber der ersten Trägerstruktur und dem zweiten Schneidelement, vorzugsweise mittels eines Schlittens, verstellbar sein.

Von besonderem Vorteil ist es, wenn das um eine Drehachse drehbare erste Schneidelement bombiert ist oder eine Kegelform oder eine Kegelstumpfform aufweist. Hierdurch ist gewährleistet, dass der abgetrennte Erdbalken gedreht und in der benachbarten, in der bei einem zuvor erfolgten Durchgang eines Pflugmoduls erzeugten Furche abgelegt wird. Hierbei ist die Drehachse des ersten Schneidelements unter einem Winkel zur Pflügrichtung eingestellt, derart, dass die vorlaufende Kante des Schneidelements gegenüber der Pflügrichtung abgesenkt ist und das Schneidelement im Wesentlichen sich schräg zur Pflügrichtung und damit zum von ihr zu schneidenden Erdbalken erstreckt.

Das erste Schneidelement wird selbsttätig rotiert, wenn sich die Pflugvorrichtung entlang des Bodens bewegt. Hierbei bewirken Reibungskräfte, dass das erste Schneidelement bewegt wird. Das erste Schneidelement ist dabei bevorzugt derart dimensioniert, dass während des Pflügens nur die untere Hälfte des erste Schneidelements, welche sich unter der ersten Drehachse befindet, in den Boden eindringt, so dass Reibkräfte mit dem Boden die Rotation induzieren können.

Die Rotation des bombierten oder tellerförmig ausgebildeten ersten Schneidelements bewirkt ferner, dass der abgetrennte Erdbalken angehoben und zugleich zur Seite abgeleitet wird. Der abgetrennte Erdbalken ist insbesondere in Reibkontakt mit einer ersten Schneidfläche des ersten Schneidelements. Die erste Schneidfläche ist diejenige Fläche des ersten Schneidelements, welche innerhalb der ersten Schneidkante ausgebildet ist. Ferner ist die erste Schneidfläche diejenige Fläche, welche zu dem abgetrennten Erdbalken gerichtet ist. Die erste Schneidfläche kann homogen ohne Aussparungen oder Erhebungen ausgebildet sein. Ferner kann die erste Schneidfläche (d. h. die Mantelfläche des ersten Schneidelements) eine Kegelform bzw. eine Kegelstumpfform ausbilden.

In einer bevorzugten Ausführungsform ist das zweite Schneidelement als runde Scheibe ausgebildet und rotierbar gelagert, wobei die zweite Schneidkante durch den umlaufenden Rand des zweiten Schneidelements definiert ist. Alternativ kann das zweite Schneidelement durch ein verstellbares Schneidmesser mit einer Schneidkante, die sich quer zur Pflügrichtung erstreckt, realisiert sein. Das Schneidelement, welches an seiner Schneide vorzugsweise gezahnt ist, ist vorzugsweise bezogen auf die Pflügrichtung mit einem definierten Winkel mit seiner Spitze leicht nach hinten gerichtet, d. h. hat einen Winkel von größer 90° zur Pflügrichtung. Mittels der zweiten Schneidkante wird der Bodenbereich des Erdbalkens von der Furchensohle des Bodens getrennt, unterschnitten und ggf. zugleich angehoben. Bei einer rotierbaren Scheibe weist die umlaufende zweite Schneidkante einen zweiten Schneidbereich auf. Der zweite Schneidbereich ist derjenige Umfangsabschnitt der zweite Schneidkante, welcher in Pflügrichtung als zweites in Kontakt mit dem Boden kommt und diesen schneidet.

Das erste Schneidelement, z. B. eine bombierte Scheibe, schneidet den Erdbalken in einer ersten, vertikalen Schichtebene, beispielsweise bei einer Bearbeitungstiefe ca. 15 bis 35 cm von der Bodenoberfläche ausgehend, ab und leitet den Erdbalken in eine zuvor gebildete Furche.

In der zweiten, horizontalen Schichtebene, die in der Bearbeitungstiefe ca. 15 bis 35 cm von der Bodenoberfläche ausgehend liegt, wird der Erdbalken durch das zweite Schneidelement horizontal d. h. von der Furchensohle, geschnitten.

Der Abstand der beiden Schneidebenen, (oben: rotierendes erstes vertikales Schneidelement; und unten: zweites horizontales Schneideelement) kann durch eine Verstellmöglichkeit des rotierenden Schneidelements angepasst werden.

Der effektive Pflugkörper, bestehend aus den Hauptkomponenten erstes bombiertes Schneidelement und zweites ebenes Schneidelement, wie Schneidmesser oder rotierbare Scheibe, entspricht etwa einer schiefen, gewundenen Ebene, die durch den Boden gezogen wird. Der abgetrennte Erdbalken schiebt sich entlang des bombierten ersten Schneidelements an dessen Innenseite hoch und zur Seite. Dieser Vorgang beinhaltet eine Stauchung der oberen sowie eine Dehnung der unteren Hälfte des Erdbalkens. Innerhalb des Erdbalkens entstehen als Folge Druck-, Zug- und Drehspannungen, die die Zerteilung des Bodens bewirken.

Mit der erfindungsgemäßen Anordnung des zweiten Schneidelements in Pflügrichtung hinter dem ersten Schneidelement kann die Reibkraft, welche ansonsten zu einer hohen benötigten Zugkraft der Pflugvorrichtung führt, reduziert werden. Da der Erdbalken, wenn er von dem ersten Schneidelement an seiner Seite geschnitten wird, bereits durch das zweite Schneidelement von der Furchensohle unterschnitten getrennt ist, wird der Erdbalken von dem ersten Schneidelement bereits angehoben und gewendet. Der zweite Schneidbereich liegt in Pflügrichtung beispielsweise zwischen 1 cm und 50 cm, insbesondere 15 cm bis 25 cm, hinter dem ersten Schneidbereich. Die im Wesentlichen horizontale zweite Schneidscheibe bzw. das Schneidmesser, kommt als zweites in Kontakt mit dem Boden und läuft sozusagen gegenüber der im Wesentlichen vertikal angeordneten ersten Schneidscheibe oder dem Schneidelement nach bzw. hinterher. Diese Anordnung des zweiten Schneidelements "unter-schneidet" die Furchenwand bzw. den zu pflügenden Erdbalken horizontal und erleichtert damit die Schieferung / Furchenräumung wesentlich. Das vertikal angeordnete bombierte erste Schneidelement schneidet den mittels des nachgelagerten zweiten Schneidelements horizontal vorgeschnittenen Erdbalken beim nachfolgenden Zug vertikal ab und wendet ihn durch die Rotationsbewegung der Hohlscheibe zugleich und legt ihn seitlich ab, vorzugsweise in die Furche.

Die Pflugvorrichtung ermöglicht somit einen leichtzügigen Pflüge-Effekt. Der Reibungskoeffizient gegenüber herkömmlichen starren Pflugkörpern wird erheblich herabgesetzt, weil das Schneidelement sich mitdreht. Mit diesem Konzept wird ein leichtzügiger, kraftstoffsparender Pflug bereitgestellt, der zugleich ein nahezu saatbeetfertiges konstantes Furchenbild erzeugt. Zusätzlich reduziert sich der Reibungskoeffizient dadurch, dass das erste Schneidelement in Form der Hohlscheibe die Halterung in deren Nabenbereich auf ihrer Rückseite aufweist, so dass die innere Oberfläche der Hohlscheibe im Wesentlichen glatt bleibt, d. h. nur allenfalls kaum vorstehende Halterungsteile aufweist.

Gemäß einer weiteren beispielhaften Ausführungsform ist das zweite Schneidelement ein aktiv rotierbares Schneidelement und die zweite Schneidkante eine das zweite Schneidelement umlaufende Schneidkante. Das zweite Schneidelement kann dabei mittels einer elektrischen oder hydraulischen Antriebsvorrichtung angetrieben bzw. rotiert werden.

Gemäß einer weiteren beispielhaften Ausführungsform ist die erste bzw. zweite Schneidkante des ersten bzw. zweiten Schneidelements bombiert verzahnt und z. B. als konkave Scheibe ausgebildet. Eine bombierte Ausführung bedeutet, dass in der ersten bzw. zweiten Schneidkante Vertiefungen oder Erhebungen (Verzahnung) ausgebildet sind. Damit kann eine verbesserte Schneidwirkung des ersten bzw. zweiten Schneidelements beim Abtrennen des Erdbalkens erzielt werden. Mittels der kugelkalottenförmigen Ausbildung insbesondere des ersten Schneidelementes kann der an ihr entlanggleitende Erdbalken eine Wendung erfahren, so dass auf die Anbringung eines Streichbleches bzw. Leitbleches verzichtet werden kann. Von Vorteil ist es, wenn die erste Schneidkante des ersten Schneidelements und/oder die zweite Schneidkante des zweiten, scheibenförmigen Schneidelements am Umfang Aussparungen aufweisen. Dies ergibt eine Bauform in der Art eines Kreissägeblattes, welches besonders leicht durch das Erdreich dringt und durch Eingriff mit dem Erdreich in Drehung versetzbar ist.

Mittels der beschriebenen Pflugvorrichtung wird eine Zugkraft- / Kraftstoffersparnis durch Leichtzügigkeit der Pflugvorrichtung ermöglicht, welche gegenüber bekannten Pflügen bis zu 25% betragen kann. Ferner ist die Pflugvorrichtung universell einsetzbar und funktioniert nahezu bei allen Bodenverhältnissen, weil sie auf alle Bodenverhältnisse eingestellt werden kann. Außerdem wird durch die Rotationsbewegung des Schneidtellers der Erdbalken kontinuierlich gebrochen. Dadurch wird die gewünschte Krümelung der Scholle (Schollenzerkleinerung) erreicht. Durch den Schollenzerkleinerungs-Effekt können die Nachbearbeitungsgänge reduziert werden. Dies spart Arbeitsgänge bis zur Saatbeet-Bearbeitung. Außerdem wird der Boden vorteilhaft durchmischt. Ferner sind konventionelle Standardkomponenten bzw. Standardzusatzwerkzeuge, wie Düngereinleger und Scheibensech, nicht länger notwendig. Durch das rotierende erste und / oder zweite Schneidelement entsteht weniger Verschleiß und entstehen somit weniger Ersatzteilkosten. Durch diese schonende Bodenbearbeitung wird humusschädigender Metallabrieb von den Schneidelementen gegenüber einer Pflugvorrichtung mit herkömmlichem Streichblech weitestgehend vermieden bzw. vermindert.

Gemäß einer weiteren beispielhaften Ausführungsform weist die Pflugvorrichtung zumindest ein weiteres Pflugmodul mit ebenfalls einem rotierbaren ersten Schneidelement mit einer umlaufenden weiteren ersten Schneidkante auf und ist derart ausgebildet ist, dass bei Bewegen der Trägerstruktur auf dem Boden entlang der Pflügrichtung ein weiterer Seitenbereich eines weiteren Erdbalkens von dem Boden mittels des weiteren Pflugmoduls abschneidbar ist und das weitere erste Schneidelement rotierbar ist, so dass der weitere Erdbalken mittels des weiteren ersten Schneidelements anhebbar ist.

Mit der oben beschriebenen Ausführungsform wird verdeutlicht, dass eine Vielzahl von Pflugmodulen in Pflügrichtung nebeneinander, d. h. entlang einer Richtung orthogonal (in einer Horizontalebene) zu der Pflügrichtung, beabstandet und nebeneinander angeordnet werden können. Somit kann eine Vielzahl von in Pflügrichtung nebeneinander angeordneten Erdbalken aus dem Boden geschnitten, angehoben und gegebenenfalls gewendet werden.

Beim Anordnen einer Vielzahl bzw. Mehrzahl von entsprechenden Pflugmodulen und damit einer entsprechenden Anzahl von Schneidelementen in Pflügrichtung hintereinander kann aufgrund des seitlichen Versatzes der einzelnen Pflugmodule zueinander quer zur Pflügrichtung in einem Zug eine breitere Fläche gepflügt werden, als es der Fall ist, wenn nur ein einziges Pflugmodul in einem Zug zum Einsatz gelangt. Wiederum ist für die Funktionalität der Pflugvorrichtung vorteilhaft, wenn Schneidelemente außer Eingriff und damit aus ihrer eingestellten Position herausschwenkbar sind. Damit ist es möglich, beispielsweise aus einem nachlaufenden Schneidelement ein vorlaufendes zu machen. Das kann in der Kombination mehrerer Pflugmodule einer Pflugvorrichtung vorteilhaft für unterschiedliche Parameter wie beispielsweise auch Bodenbeschaffenheit im Sinne einer optimalen Anpassung sinnvoll bzw. von Vorteil sein.

Mit der erfindungsgemäßen Pflugvorrichtung wird beispielsweise mit dem oberen rotierbaren bombierten ersten Schneideelement selbst ohne ein Leitblech und ohne Streichblech ein schonendes und flaches Wenden des Erdbalkens des Bodens bis z. B. 15 Zentimeter ermöglicht.

In einer beispielhaften Ausführungsform sind das erste Schneidelement und das zweite Schneidelement austauschbar (z. B. mittels Schraubverbindungen) an der jeweiligen Trägerstruktur angeordnet. Die erste Trägerstruktur ist hierbei derart ausgebildet, dass sie an das Grundgerüst der Pflugvorrichtung in lösbarer Weise montierbar ist, was bevorzugt über Schraubverbindungen erfolgt. Zur Steinsicherung können auch Scherbolzen vorgesehen sein. Die hierfür vorgesehenen Montageelemente, wie Bohrungen oder Zapfen, sind bevorzugt derart beschaffen und angeordnet, dass sie mit handelsüblichen Grundgerüsten für Pflugvorrichtungen kompatibel sind. Somit kann das Pflugmodul ohne weiteres an die Grundstruktur einer Pflugvorrichtung an Stelle beispielsweise eines Pflugkörpers nachgerüstet werden.

Aufgrund der Rotation des ersten Schneidelements wird der abgetrennte Erdbalken leicht angehoben, gewendet und auf die Furche abgegeben. Bei Bewegung der Pflugvorrichtung entlang der Pflügrichtung wird der Erdbalken in Pflügrichtung gewendet.

Aufgrund des Anhebens des Erdbalkens mittels des rotierenden ersten Schneidelements kann der Erdbalken energieeffizient in Pflügrichtung hinter dem Schneidelement abgelegt werden.

In einer besonders bevorzugten Ausführungsform des erfindungsgemäßen Pflugmoduls ist das zweite Schneidelement als ein feststehendes Schneidmesser ausgebildet. Das Schneidmesser ist hierbei als eine flache rechteckige, gerade oder gebogene Klinge ausgebildet, welche an einem Endbereich an der zweiten Trägerstruktur befestigt ist. Die Befestigung erfolgt bevorzugt durch Verschraubung, was auch einen einfachen Austausch des zweiten Schneidelements bei Abnutzung ermöglicht. Die Schneide der Klinge zeigt in ihrer Arbeitsstellung in Pflügrichtung und ist generell quer zu dieser Richtung orientiert.

In einer vorteilhaften Abwandlung dieser Bauform ist das Schneidmesser des zweiten Schneidelements L-förmig ausgebildet, wobei ein erster Balken des Schneidmessers in Arbeitsstellung des Pflugmoduls horizontal ausgerichtet ist und ein zweiter Balken im Wesentlichen senkrecht hierzu ausgerichtet ist. Der erste Balken scheidet somit den Bodenbereich des zu bildenden Erdbalkens. Während der zweite, in Arbeitsstellung des Pflugmoduls vertikale Balken vor dem ersten Schneidelement liegt und dessen Eindringen in den Boden erleichtert, da er im Wesentlichen in derselben Ebene wie die vorlaufende Kante des ersten Schneidelements verläuft. Schon aus Gründen der mechanischen Robustheit ist es zweckmäßig, dass das Schneidmesser einstückig ausgebildet ist. Es hat generell die Form einer flachen Klinge, die auf der Vorderseite eine geschärfte Schneide aufweist. Der Anstellwinkel der Klinge in Bezug auf die Pflügrichtung kann einstellbar sein, um zu gewährleisten, dass eine gewünschte Eindringtiefe des Pflugmoduls in den Boden erreicht und gehalten wird.

Die Erfindung umfasst gemäß Anspruch 17 auch eine Pflugvorrichtung, an deren Grundgerüst mindestens ein Pflugmodul gemäß der Erfindung angeordnet ist, vorzugsweise sechs bis 16 derartige Pflugmodule angeordnet sind. Das Pflugmodul ist hierbei bevorzugt über Schraubverbindungen mit dem Grundgerüst fest verbunden, wobei die Verbindung über die erste Trägerstruktur erfolgt. Es versteht sich, dass am Grundgerüst und an der ersten Trägerstruktur kompatible Befestigungselemente wie Bohrungen oder Gewindebolzen ausgebildet sein müssen. Alternativ kann auch ein Adapterelement vorgesehen sein, um das Pflugmodul an verschiedene Grundgerüste von Pflügen anpassen und befestigen zu können. Das Pflugmodul lässt sich somit in einfacher Weise an einem Grundgerüst montieren oder beispielsweise zu Wartungszwecken entfernen.

Im Folgenden werden zur weiteren Erläuterung und zum besseren Verständnis der vorliegenden Erfindung Ausführungsbeispiele unter Bezugnahme auf die beigefügten Zeichnungen näher beschrieben. Es zeigen:
- Fig. 1: eine Darstellung eines Pflugmoduls hinsichtlich seiner Grundfunktion gemäß einer beispielhaften Ausführungsform der Erfindung;
- Fig. 2: eine schematische Darstellung einer Pflugvorrichtung hinsichtlich ihrer allgemeinen Funktionsweise gemäß einer beispielhaften Ausführungsform der vorliegenden Erfindung während eines Pflügvorgangs;
- Fig. 3: ein Pflugmodul hinsichtlich seines Grundaufbaus gemäß einer weiteren beispielhaften Ausführungsform der Erfindung, in welcher die alternative Anordnung eines Schneidmessers und einer Schneidscheibe als zweites Schneidelement gezeigt ist;
- Fig. 4: eine Darstellung einer erfindungsgemäßen ihren Grundaufbau darstellenden Pflugvorrichtung als Beetpflugvorrichtung mit drei Pflugmodulen in einer weiteren beispielhaften Ausführungsform der vorliegenden Erfindung;
- Fig. 5: eine Draufsicht auf eine Pflugvorrichtung gemäß Fig. 4, bei welcher beispielhaft ein Pflugkörper durch ein erfindungsgemäßes Pflugmodul im Sinne einer Nachrüstung ausgetauscht ist;
- Fig. 6: eine Darstellung von zwei Pflugmodulen gemäß einem weiteren Ausführungsbeispiel, welche beidseitig des Grundgerüstes angeordnet sind;
- Fig. 7: eine Anordnung gemäß Fig. 7 in geänderter Perspektive;
- Fig. 8: die Darstellung eines Ausführungsbeispiels mit stufenlos veränderlichen Schneidelementen;
- Fig. 9: eine Gesamtanordnung eines Pfluges gemäß der Erfindung mit stufenlos verstellbaren Aktuatoren für die Schneidelemente; und
- Fig. 10: eine Gesamtanordnung eines Pfluges gemäß der Erfindung gemäß Fig. 9 mit zusätzlicher Schnittbreitenverstellung.

Gleiche oder ähnliche Komponenten in unterschiedlichen Figuren sind mit gleichen Bezugsziffern versehen. Die Darstellungen in den Figuren sind weitgehend schematisch und lediglich beispielhaft.

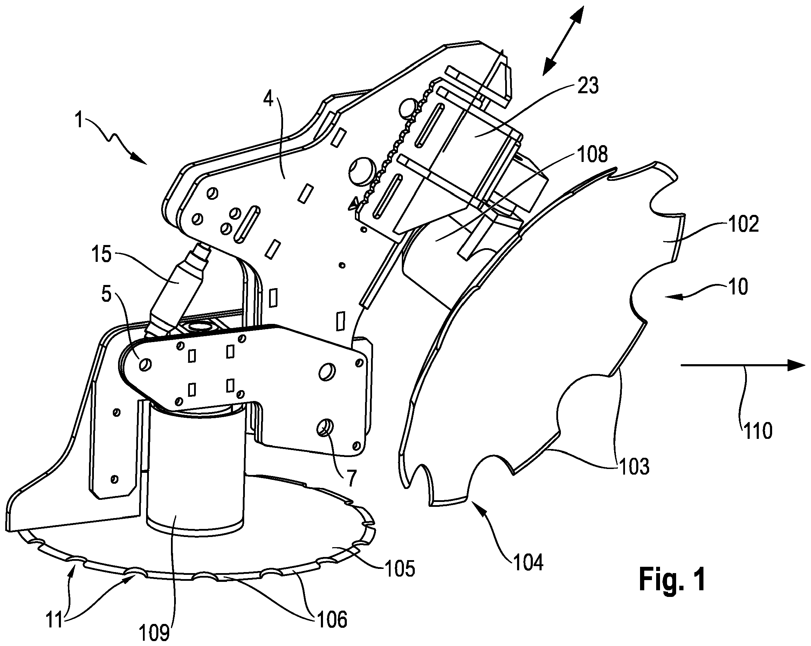

Figur 1 zeigt ein Pflugmodul zum Pflügen eines Bodens 120, bei welchem ein erstes Schneidelement 102 in Form einer kugelkalottenförmigen Hohlscheibe vor einem zweiten Schneidelement 105 in Form eines flachen Tellers in Pflügrichtung hintereinander angeordnet sind. Das erste Schneidelement 102 ist zum Schneiden der Seitenfläche eines Erdbalkens vorgesehen, wohingegen das nach dem ersten Schneidelement 102 angeordnete zweite Schneidelement 105 als flache Scheibe ausgebildet ist, welche den Furchenboden schneidet. Beide Schneidelemente 102, 105 sind mittels einer Trägerstruktur 4, 5 als Pflugmodul zusammengefügt. Die Trägerstruktur 4, 5 kann an einem Grundgerüst (nicht gezeigt) befestigt sein, wobei das zweite Schneidelement 105 mit dem ersten Schneidelement 102 über dessen Trägerstruktur 4 gelenkig verbunden ist.

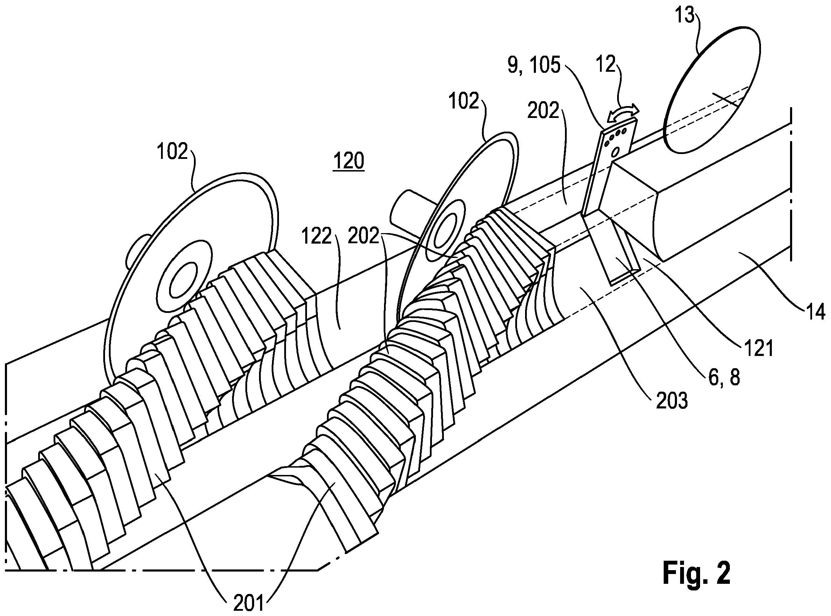

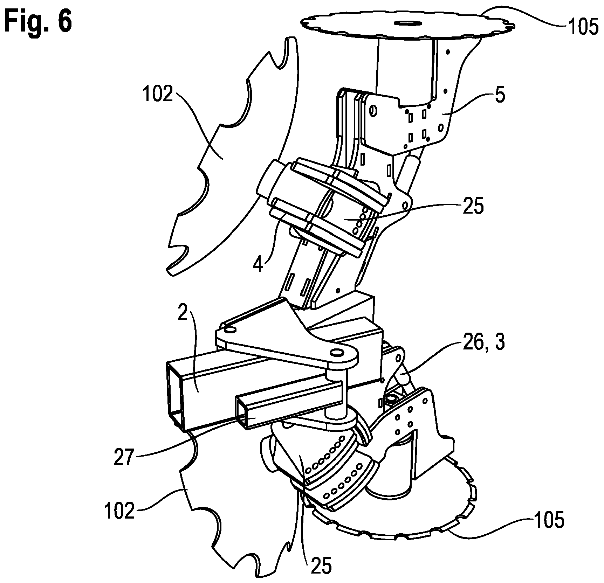

Wie im Grundaufbau des Pflugmoduls 1 gemäß Fig. 1 gezeigt ist, ist ein rotierbares erstes Schneidelement 102 mit einer umlaufenden, bombierten ersten Schneidkante 103 mit einem ersten Schneidbereich 104 an einer ersten Trägerstruktur 4 angeordnet und derart ausgebildet, dass bei Bewegen der Trägerstruktur 4 auf dem Boden 120 entlang der Pflügrichtung 110 ein Seitenbereich 202 (siehe Fig. 2) eines Erdbalkens 201 des Bodens 120 mittels eines ersten Schneidbereichs der ersten Schneidkante 103 schneidbar ist, wie in Fig. 2 gezeigt ist. Die Pflügrichtung 110 ist definiert als die Richtung, entlang welcher die Pflugvorrichtung 2 über dem Boden 120 verfahren wird. Ein zweites Schneidelement 105 mit einer zweiten Schneidkante 106 mit einem zweiten Schneidbereich 107 ist an einer zweiten Trägerstruktur 5 angeordnet, die mit der ersten Trägerstruktur 4 lösbar verbunden und gegenüber der ersten Trägerstruktur schwenkbar ist. Das zweite Schneidelement 105 ist derart ausgebildet, dass bei Bewegen der Trägerstruktur 5 auf dem Boden 120 entlang der Pflügrichtung 110 ein Bodenbereich 203 eines Erdbalkens 201 des Bodens 120 mittels eines zweiten Schneidbereichs der zweiten Schneidkante 106 abschneidbar ist, wobei das zweite Schneidelement 105 relativ zu dem ersten Schneidelement 102 in Pflügrichtung 110 derart angeordnet ist, dass der zweite Schneidbereich in Pflügrichtung nach dem ersten Schneidbereich angeordnet ist. Der zweite Schneidbereich ist somit von dem ersten Schneidbereich mit dem Abstand x beabstandet. Stellaktuatoren 26 (26.1, 26.2 und 26.3) zur Winkelverstellung der Schneidelemente 102, 105 (siehe Fig. 6 bis 9) sind der Einfachheit der Darstellung wegen weggelassen.

Da beim Pflügen das Grundgerüst 3 des Pflugmoduls 1 mit der ersten und zweiten Trägerstruktur 4 und 5 in Richtung Trennfläche 121 des Bodens 120 gedrückt wird, wird entsprechend auch das erste Schneidelement 102 in Richtung einer Trennfläche 121 gedrückt, so dass das erste Schneidelement 102 in der gewünschten Bodentiefe während des Pflügens gehalten wird.

Fig. 2 zeigt eine schematische Darstellung der wesentlichen Funktionselemente einer Pflugvorrichtung gemäß einer beispielhaften Ausführungsform der vorliegenden Erfindung während eines Pflügvorgangs. Diese Figur 2 zeigt die korrekte räumliche Anordnung der ersten und zweiten Schneidelemente 102 und 105 sowie die Bildung und Wendung von Erdbalken 201. Die übrigen Bauteile der zugehörigen Pflugvorrichtung 2 sind der Übersichtlichkeit wegen nicht gezeigt.

Wie in Fig. 2 dargestellt, werden beim Pflügen aus dem Boden 120 sogenannte Erdbalken 201 herausgeschnitten. Ein Erdbalken 201 weist einen Seitenbereich 202 auf, entlang welchem das erste Schneidelement 102 schneidet. Ferner weist der Erdbalken 201 einen Bodenbereich 203 auf, welcher die beiden Seitenbereiche 202 verbindet und mittels des zweiten Schneidelements 105, welches hier beispielhaft als feststehendes Schneidmesser 6 in Doppel-L-Form dargestellt ist, von dem Boden 120 getrennt wird. Entsprechend weist der Boden 120 an dem Bodenbereich 203 des Erdbalkens 201 eine Trennfläche 121, die sog. Furchensohle 121, auf. Nach Herausschneiden des Erdbalkens 201 ist in dem Boden 120 die Furchenwand 122 erkennbar, von welcher der Seitenbereich 202 des Erdbalkens 201 gelöst wurde. Der Bodenbereich 203 definiert somit zum Zeitpunkt des Trennens von dem Boden 120 die in vertikaler Richtung unterste horizontale Fläche des Erdbalkens 201. Die Seitenbereiche 202 des Erdbalkens 201 definieren zum Zeitpunkt des Trennens von dem Boden 120 die seitlichen Wandbereiche des Erdbalkens 201.

Wie in Fig. 1 dargestellt, sind die Trägerstrukturen 4 und 5 für die beiden Schneidelemente 102 und 105 so ausgebildet, gemeinsam zumindest das erste Schneidelement 102 und das zweite Schneidelement 105 mit dem Grundgerüst 3 einer Pflugvorrichtung 2 fest zu verbinden. Die erste Trägerstruktur 4 ist über das Grundgerüst 3 nicht der Pflugvorrichtung 2 an einer Zugmaschine, wie beispielsweise einem Traktor, befestigbar, um somit entsprechend die Schneidelemente 102, 105 entlang der Pflügrichtung 110 anzutreiben. Das Pflugmodul 1 weist beispielsweise die erste und zweite Trägerstruktur 4, 5 auf, die fest oder über Gelenke schwenkbar ausgebildet sein können.

Die erste und die zweite Trägerstruktur 4 bzw. 5 bilden somit eine starre Befestigungsstruktur für die Schneidelemente 102, 105. Die Schneideelemente 102, 105 sind derart an den Trägerstrukturen 4, 5 fixiert, dass während des Pflügens keine Relativbewegung zwischen den Positionen der Schneidelemente 102, 105 möglich ist. Wird somit erfindungsgemäß das zweite Schneidelement 105 aufgrund des Schneidens des Erdbalkens 201 in Richtung Boden 120 gedrückt, so wird gleichzeitig auch das erste Schneidelement 102 in den Boden 120 gedrückt, da beide Trägerstrukturen 4, 5 fest miteinander verbunden sind.

Das erste Schneidelement 102 und das zweite Schneidelement 105 sind rotierbar an der jeweiligen Trägerstruktur 4 oder 5 befestigt. Entsprechend besitzt das erste Schneidelement 102 eine Drehachse 108, um welche sich das Schneidelement 102 dreht. Das zweite Schneidelement 105 bildet eine zweite Drehachse 109 aus, um welche sich das zweite Schneidelement 105 dreht. Das erste Schneidelement 102 und das zweite Schneidelement 105 sind hier beispielhaft als kugelkalottenförmiger Schneidteller bzw. als ebene Scheibe ausgebildet und weisen eine kreisrunde Umfangslinie auf. Entlang der Umfangslinie sind die entsprechende umlaufende erste Schneidkante 103 und die zweite Schneidkante 106 ausgebildet. Mittels der ersten Schneidkante 103 wird der Seitenbereich 202 des Erdbalkens 201 von der Furchenwand 122 des Bodens 120 getrennt. Die umlaufende erste Schneidkante 103 weist einen Schneidbereich 104 auf. Der Schneidbereich 104 ist derjenige Umfangsabschnitt der ersten Schneidkante 103, welcher in Pflügrichtung 110 als erstes in Kontakt mit dem Boden 120 kommt und diesen schneidet. Mittels der zweiten Schneidkante 106 wird ein Bodenbereich 203 des Erdbalkens 201 von dem Boden 120 getrennt. Der zweite Schneidbereich der zweiten Schneidkante 106 ist derjenige Umfangsabschnitt des zweiten Schneidelements 105, welcher in Pflügrichtung 110 als zweites Kontakt mit dem Boden 120 aufnimmt bzw. dem ersten Schneidelement nachläuft und diesen schneidet. Der Doppelpfeil 12 in Fig. 2 deutet an, dass das zweite Schneidelement 105 schwenkbar an der zweiten, hier nicht gezeigten Trägerstruktur 5 gelagert ist. Die Schwenkung erlaubt die Einstellung des Anstellwinkels des Schneidmessers 6 in Bezug auf die Pflügrichtung und damit die Eindringtiefe des Pflugmoduls 1 in den Boden 120.

Vor dem Pflugmodul 1 oder mit diesem verbunden kann ein rotierbares Scheibensech 13 angeordnet sein, was den Boden 120 vor dem vertikalen, zweiten Balken 9 eines Schneidmessers 6 und dem ersten Schneidelement 102 vorschneidet bzw. öffnet. Hierdurch wird die für das Pflügen erforderliche Zugkraft vermindert, desgleichen der Verschleiß des Schneidmessers 6 und des nachfolgenden ersten Schneidelements 102. Das Schneidmesser schneidet als Doppel- oder Dreifachschneide horizontal und vertikal.

Das erste Schneidelement 102 wird rotiert, wenn sich die Pflugvorrichtung 2 entlang des Bodens 120 bewegt. Hierbei bewirken beispielsweise Reibungskräfte, dass das Schneidelement 102 bewegt wird. Das Schneidelement 102 ist dabei derart dimensioniert, dass während des Pflügens nur die untere Hälfte des ersten Schneidelements 102, welche sich unter der Drehachse 108 befindet, in den Boden 120 eindringt, so dass Reibkräfte mit dem Boden 120 die Rotation induzieren.

Die Rotation des ersten Schneidelements 102 bewirkt ferner, dass der abgetrennte Erdbalken 201 angehoben wird. Dies wird in Fig. 2 mit den Pfeilen, welche die Förderrichtung 123 des Erdbalkens 201 entlang der Pflugvorrichtung 2 angeben, dargestellt.

Der abgetrennte Erdbalken 201 ist in Reibkontakt mit einer Schneidfläche 113 des Schneidelements 102. Die Schneidfläche 113 ist diejenige Fläche des Schneidelements 102, welche innerhalb der ersten Schneidkante 103 ausgebildet ist bzw. von dieser umgeben wird. Ferner ist die Schneidfläche 113 diejenige Fläche, welche zu dem abgetrennten Erdbalken 201 gerichtet ist. Die Schneidfläche 113 kann, wie in Fig. 1 dargestellt, homogen ohne Aussparungen oder Erhebungen ausgebildet sein.

Aufgrund des Anhebens des Erdbalkens 201 mittels des rotierenden Schneidelements 102 kann der Erdbalken 201 energieeffizient in die benachbarte Furche befördert werden. Diese Furche wurde bei einem vorherigen Durchgang eines Pflugmoduls ausgehoben, wie in Fig. 2 dargestellt ist.

Gemäß Fig. 1 sind das erste Schneidelement 102 und das zweite Schneidelement 105 dabei derart relativ zueinander an der Trägerstruktur 4, 5 befestigt, dass der Schneidbereich 104 des ersten Schneidelements 102 in vertikaler Richtung beabstandet zu dem zweiten Schneidelement 105 ist bzw. über dem zweiten Schneidelement 105 liegt, wenn die Pflugvorrichtung 3 in Arbeitsstellung auf dem Boden 120 aufliegt bzw. in den Boden eindringt.

Das rotierende Schneidelement 102 und das zweite Schneidelement 105 wirken synergistisch zusammen. Einerseits wird mittels des zweiten Schneidelements 105 eine gewünschte Pflugtiefe konstant gehalten, da die abgeschnittenen Erdbalken 201 mit einer definierten Druckkraft / Einzugskraft auf das zweite Schneidelement 105 drücken und somit entgegen einem Auftrieb des rotierenden Schneidelements 102 wirken. Andererseits wird die energetisch vorteilhafte Wirkung des rotierenden Schneidelements 102 beim Schneiden der Erdbalken 201, insbesondere der Seitenflächen bzw. Seitenbereiche 202 der Erdbalken 201, ausgenutzt. Somit wird eine energieeffiziente Pflugvorrichtung 2 bereitgestellt, ohne die Qualität des Furchenbilds negativ zu beeinflussen. Zudem bewirkt das rotierende zweite Schneidelement 105, dass der abgeschnittene Erdbalken 201 in Richtung des ersten Schneidelements 102 gedrückt wird, so dass eine Krümelung des abgeschnittenen Erdbalkens 201 vorgenommen wird. Ferner wird aufgrund einer Seitenkraft, welche mittels des vorgelagerten zweiten Schneidelementes 105 in die erste Trägerstruktur 4 eingetragen wird, dass einer auf das erste Schneidelement 102 während des Schneidens induzierten Seitenkraft entgegengewirkt wird, so dass eine einfachere und bessere Führung der Pflugvorrichtung 2 mit einer Zugmaschine ermöglicht wird.

Das erste Schneidelement 102 und das zweite Schneidelement 105 sind derart zueinander an der ersten und der zweiten Trägerstruktur 4 und 5 angeordnet, dass der zweite, die vordere Hälfte des Schneidelementes 105 umfassende Schneidbereich 107 der zweiten Schneidkante 106 des zweiten Schneidelements 105 in Pflügrichtung 110 mit einem Abstand x nach dem ersten Schneidbereich 104 der ersten Schneidkante 103 des ersten Schneidelements 102 liegt. Somit trifft zuerst während des Pflügens das rotierende erste Schneidelement 105 den Erdbalken 201 seitlich und schneidet ihn energieeffizient mit der zweiten Schneidkante 106 des zweiten Schneidelements 105 diesen vom Restboden 120 ab. Nachfolgend schneidet das erste Schneidelement 105 mit der ersten Schneidkante 103 einen Seitenbereich 202 eines Erdbalkens 201. Das zweite Schneidelement 105 unterscheidet dabei die mit dem ersten Schneidelement 102 geschnittene Furchenwand. Dadurch kann das nachfolgende Schneidelement 102 des nachfolgenden Moduls den Erdbalken seitlich vertikal schneiden und wenden. Anschließend wird der Erdbalken 201 durch die gewölbte Form des ersten Schneidelements 102 und dessen schräge Orientierung zur Pflügrichtung gedreht und in der daneben liegenden Furche abgelegt. Somit schneiden das erste Schneidelement 102 und das zweite Schneidelement 105 energieeffizient den Erdbalken 201 an, und sie werden gleichzeitig mit der auf das zweite Schneidelement 105 wirkenden Druckkraft in der gewünschten Schneidtiefe gehalten.

Das zweite Schneidelement 105 unterschneidet mit einem Bereich (ca. halbe Kreisscheibe) den Erdbalken 201. Ein weiterer Befestigungsbereich des zweiten Schneidelements 105, an welchem eine Befestigungsstange/-welle (Drehachse 109) zur Befestigung mit der ersten Trägerstruktur 4 angeordnet ist, wird an der von dem ersten Schneidelement 102 abgewandten Seite an dem zweiten Schneidelement 105 ausgebildet. Somit verläuft die Befestigungsstange/-welle während des Pflügens in einer bereits bearbeiten Furche, was die Zugkraft der Pflugvorrichtung 2 reduziert.

Die Trägerstruktur 4, 5 ist derart ausgebildet, dass das erste Schneidelement 102 und / oder das zweite Schneidelement 105 entlang der Pflügrichtung 110 und/oder senkrecht, d. h. vertikal zur Pflügrichtung 110, relativ zueinander einstellbar sind. Beispielsweise können das erste Schneidelement 102 mittels Bolzenverbindungen 115, welche in Langlöchern 116 der ersten Trägerstruktur 4 eingreifen können, an der Trägerstruktur 4 verschiebbar befestigt werden. Mittels der Einstellung der Abstände des Schneidelements 102, des zweiten Schneidelementes 105 und der Trägerstruktur 4, 5 entlang der Pflügrichtung 110 kann die Pflugvorrichtung 3 auf spezielle Bedingungen verschiedener Bodenarten eingestellt werden und effizienzoptimiert eingesetzt werden. Ferner können die Elemente nachjustiert werden, falls sich die Elemente nach Benutzung der Pflugvorrichtung 2 verziehen.

Ferner kann die Trägerstruktur 4, 5 derart ausgebildet sein, dass das erste Schneidelement 102 entlang einer Richtungskomponente der ersten Drehachse 108 und das zweite Schneidelement 105 entlang einer Richtungskomponente der zweiten Drehachse 109 relativ zueinander einstellbar sind. Insbesondere kann ein Winkel zwischen der ersten Drehachse 108 und der zweiten Drehachse 109 eingestellt werden. Die erste Schneidkante 103 läuft in einer ersten Schneidebene, während die zweite Schneidkante 106 in einer zweiten Schneidebene verläuft. Das erste Schneidelement 102 und das zweite Schneidelement 105 sind dabei derart relativ zueinander an der jeweiligen Trägerstruktur 4 oder 5 befestigt, dass die erste Schneidebene und die zweite Schneidebene dabei nicht parallel ausgebildet sind und einen Winkel zueinander aufweisen. Beispielsweise ist ein Winkel zwischen der ersten Drehachse 108 und der zweiten Drehachse 109 kleiner als 90°, insbesondere zwischen 45° und 80°.

Entsprechend kann mit der flexiblen Anbringung des Schneidelements 102 und / oder des zweiten Schneidelementes 105 an der Trägerstruktur 4 und 5 ein Abstand zwischen dem Schneidbereich 104 der ersten Schneidkante 103 des Schneidelements 102 und der zweiten Schneidkante 106 des zweiten Schneidelementes 105 eingestellt werden.

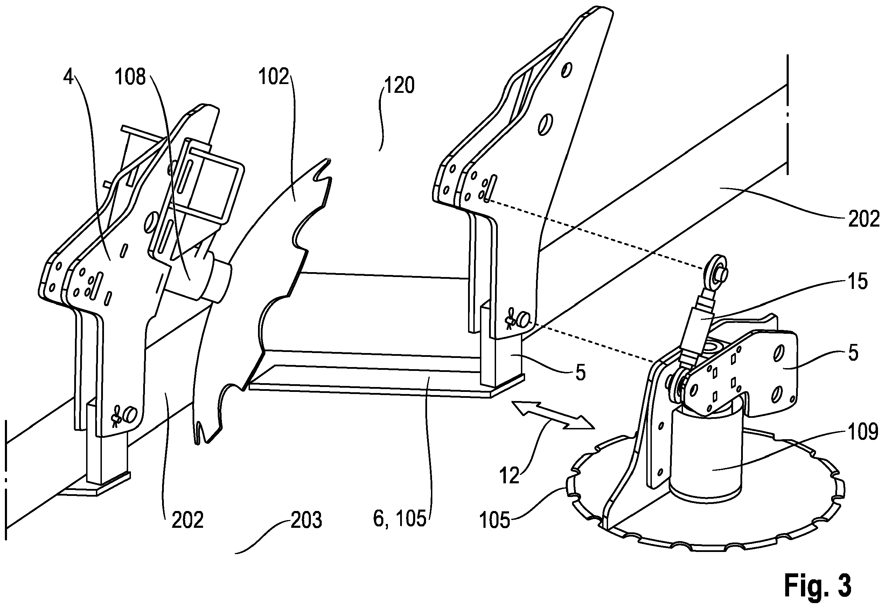

Fig. 3 zeigt ein Pflugmodul 1 gemäß einer beispielhaften Ausführungsform der vorliegenden Erfindung, in welcher das zweite Schneidelement 105 alternativ als rotierende Scheibe 16 oder als feststehendes Schneidmesser 6 ausgebildet ist.

Das erste Schneidelement 102 und / oder das zweite Schneidelement 105 kann schwenkbar, beispielsweise mittels eines Gelenks, an der jeweiligen Trägerstruktur 4 oder 5 befestigt werden, so dass ein Winkel zwischen der ersten Drehachse 108 und der zweiten Drehachse 109 eingestellt und in einer gewünschten Position fixiert werden kann. Diese Möglichkeit ist hier beispielhaft durch einen Hydraulikzylinder oder eine Spindel 15 angedeutet, der bzw. die das in der zweiten Trägerstruktur 5 schwenkbar gelagerte zweite Schneidelement 105 mit der ersten Trägerstruktur 4 verbindet. Die Position des ersten Schneidelements 102, das hier beispielhaft als konkave Scheibe mit bombiertem Rand gezeigt ist, kann ebenfalls in Bezug auf die erste Trägerstruktur 4 beispielsweise hydraulisch eingestellt werden. Durch eine solche Einstellung ist unter anderem die Breite der gebildeten Furche 14 oder das Zusammenwirken der beiden Schneidelemente 102 und 105 beeinflussbar.

Das erste Schneidelement 102 in Fig. 3 weist eine Kugelkalottenform und an seiner ersten Drehachse 108 einen entsprechenden Befestigungsbereich auf, welcher in einer Befestigungsebene ausgebildet ist. Die umlaufende erste Schneidkante 103 verläuft innerhalb der ersten Schneidebene, wobei die Befestigungsebene von der Schneidebene entlang der Drehachse 108 beabstandet ist. Zwischen der umlaufenden ersten Schneidkante 103 und dem Befestigungsbereich ist die Schneidfläche 113 des Schneidelements 102 ausgebildet.

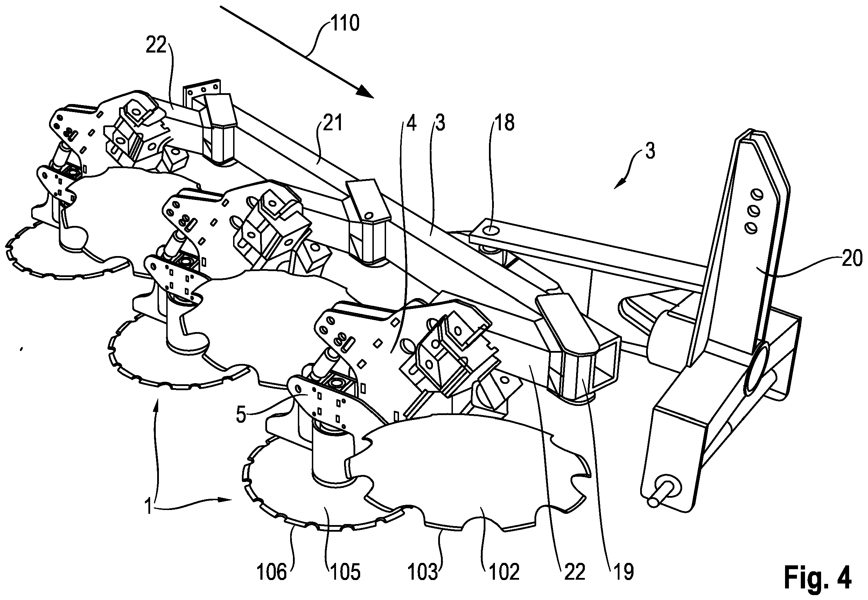

Fig. 4 ist eine Darstellung mit einer erfindungsgemäßen Pflugvorrichtung 2 als Beetpflugvorrichtung, an deren Grundgerüst 3 beispielhaft drei Pflugmodule 1 gemäß der Erfindung gezeigt sind. Jedes der drei gezeigten Pflugmodule weist ein erstes Schneidelement 102 und ein dazu nachlaufendes zweites Schneidelement 105 auf, welche jeweils an einer ersten Trägerstruktur 4 und einer zweiten Trägerstruktur 5 miteinander zu einem einheitlichen Pflugmodul verbunden sind, wobei die zweite Trägerstruktur 5 an der ersten Trägerstruktur schwenkbar angelenkt ist, damit das zweite Schneidelement 105 durch den Stellaktuator 26.3 (siehe Fig. 6 bis 9) einen zumindest kleinen, einstellbar festlegbaren Anstellwinkel nach unten in das Erdreich haben kann, um so den nötigen Druck auf die Pflugvorrichtung auszuüben, in der gewünschten Pflügtiefe zu verbleiben und so das als Hohlscheibe ausgebildete erste Schneidelement 102 in der gewünschten Tiefe zum Abschneiden der Seite des Erdbalkens zu gewährleisten. Beim Pflügen in der mit dem Pfeil 110 angegebenen Pflügrichtung ist das erste Schneidelement 102 mit der umlaufenden Schneidkante 103 zum Schneiden der Seiten des Erdbalkens dem zweiten Schneidelement 105 mit ebenfalls umlaufender Schneidkante 106 zum Schneiden des Furchenbodens vorlaufend. Ein erstes Kopplungsteil 20 dient dem Verbinden der Pflugvorrichtung 2 mit beispielsweise einer Zugmaschine, wobei das erste Kupplungsteil 20 gelenkig an dem allgemein balkenförmig ausgebildeten zweiten Kupplungsteil 21 verbunden ist. Das zweite Kupplungsteil 21 stellt prinzipiell das Grundgerüst 3 dar. Am Grundgerüst 3 sind mittels Gelenke 19 die Pflugmodule 1 befestigt.

Beim Ziehen über den Boden120 dringt ein Teil der Pflugmodule bis zu einer konstruktiv vorbestimmten Tiefe in den Boden 120 ein und wirft die dabei erzeugten Erdbalken 201 aus. Die Pflugmodule 1 liegen hierbei im Wesentlichen gestaffelt nebeneinander, so dass mehrere Erdbalken entsprechend ihrer Anzahl erzeugt werden, wie in Fig. 2 erkennbar ist. Diese Erdbalken 201 kommen nach dem Wenden beim Verlassen der ersten Schneidelemente 102 in der von den davor liegenden Schneidelementen 102 gebildeten Furche 14 zu liegen, wie dies in Fig. 2 gezeigt ist.

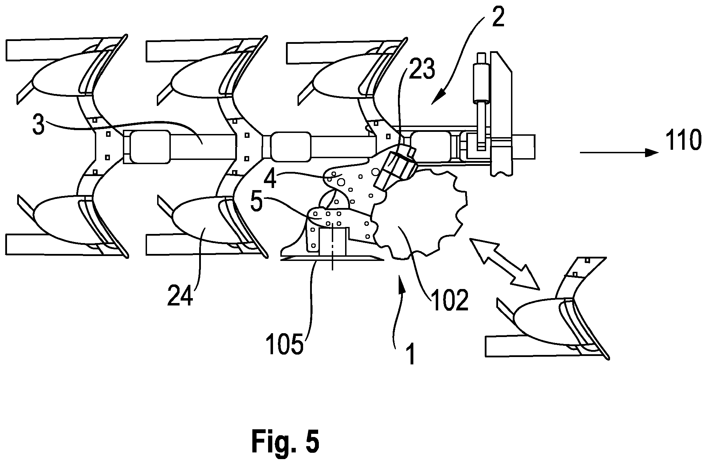

Und schließlich ist in Figur 5 in Draufsicht eine Pflugvorrichtung 3 dargestellt, bei welcher sechs Pflugkörper 24 jeweils paarweise nebeneinander angeordnet sind. Es ist mit dem Doppelpfeil dargestellt, dass die Pflugkörper 24 gegen die erfindungsgemäßen Pflugmodule 1 ausgetauscht werden können. Dies ist bezüglich des Montageaufwandes besonders einfach, weil die kompletten Pflugmodule 1 gegen die ursprünglich an der Pflugvorrichtung montierten Pflugkörper 24 austauschbar sind, ohne dass sich der Montageaufwand nennenswert erhöht. Die Pflugmodule 1 gemäß der Erfindung weisen ein erstes, vorlaufendes Schneidelement 102 zum Schneiden der Seiten des Erdbalkens und ein nachlaufendes Schneidelement 105 zum Schneiden des Furchenbodens auf. Das zweite Schneidelement 105 ist an einer Trägerstruktur 5 befestigt, wohingegen das erste Schneidelement 102 an einer ersten Trägerstruktur 4 angebracht ist. Die Trägerstruktur 4 und die Trägerstruktur 5 sind miteinander verbunden, und zwar derart, dass die zweite Trägerstruktur 5 verschwenkbar ist, um den Anstellwinkel des zweiten Schneidelementes 105 bezüglich des Furchenbodens einstellen zu können. Das erste Schneidelement 102 ist in mehreren Freiheitsgraden verstellbar, so dass durch die Verstellung einerseits die Pflugbreite, andererseits das Zusammenwirken zwischen dem ersten Schneidelement 102 und dem zweiten Schneidelement 105 in Abhängigkeit von den Bodenparametern und auch hinsichtlich weiterer Parameter einstellbar ist. So ist beispielsweise das erste Schneidelement 102 mittels eines Schlittens 23 an der ersten Trägerstruktur 4 verstellbar angebracht, so dass deren Höhe bezüglich der Ebene, welche durch das zweite Schneidelement 105 geschnitten wird, einstellbar ist.

In Fig. 6 ist eine Darstellung von zwei Pflugmodulen 1, welche beidseitig an einem Grundgerüst 3 angebracht sind. Der zuvor beschriebene Grundaufbau des Pflugmoduls 1 besteht in einer Trägerstruktur 4, an welcher das erste Schneidelement 102 befestigt ist und an welcher die zweite Trägerstruktur 5 angebracht ist, welche das zweite Schneidelement 105 trägt, wobei die erste Trägerstruktur 4 an dem Grundgerüst 2 befestigt ist. An der ersten Trägerstruktur 4 des als Hohlscheibe ausgebildeten ersten Schneidelementes 102 ist eine Lochplatte 25 angeordnet, welche ein Verschwenken des ersten Schneidelementes um eine Achse ermöglicht, welche im Wesentlichen senkrecht auf den zu bearbeitenden Boden gerichtet ist. Die Verschwenkung wird dadurch realisiert, dass ein als Scheibensegment ausgebildetes Element in Form der Lochplatte 25 an dem äußeren Umfang Bohrungen in einem definierten Rasterabstand zueinander angeordnet hat. Diese Bohrungen dienen dazu, ein Verschwenken der Hohlscheibe, d. h. des ersten Schneidelementes 102 um einen dem Rasterabstand der Bohrungen definiertes Winkelmaß einzustellen. Es handelt sich also bei diesem Ausführungsbeispiel um ein stufenweises Verstellen des Anschnittwinkels des ersten Schneidelementes 102. Eingezeichnet ist des Weiteren ein hydraulischer Stellaktuator 26.3, welcher zur Verstellung des Anschnittwinkels des zweiten Schneidelementes 105 beim Bewegen durch den Boden und Erzeugen der Furchensohle diesen Anschnittwinkel stufenlos verstellen kann. Der weitere Grundaufbau entspricht dem, wie er beispielsweise mit Bezug auf Fig. 1 bereits erläutert wurde, so dass diese Details hier nicht wiederholt werden. Zusätzlich ist in Fig. 6 ein Verbindungselement, welches in Form einer Schubstange 27 ausgebildet ist, gezeigt. Die Schubstange 27 verbindet über Schwenkplatten alle an der Pflugvorrichtung befestigten Pflugmodule miteinander, so dass bei Längsbewegung der Schubstange 27 alle Pflugmodule 1 hinsichtlich ihrer Schnittbreite synchron verstellbar sind. Die Schubstange 27 ist dabei als Vierkant-Hohlprofil ausgebildet und an einer Hülse vorzugsweise angeschweißt, welche von einem die jeweilige Schwenkachse repräsentierenden Stift im Inneren durchgriffen ist.

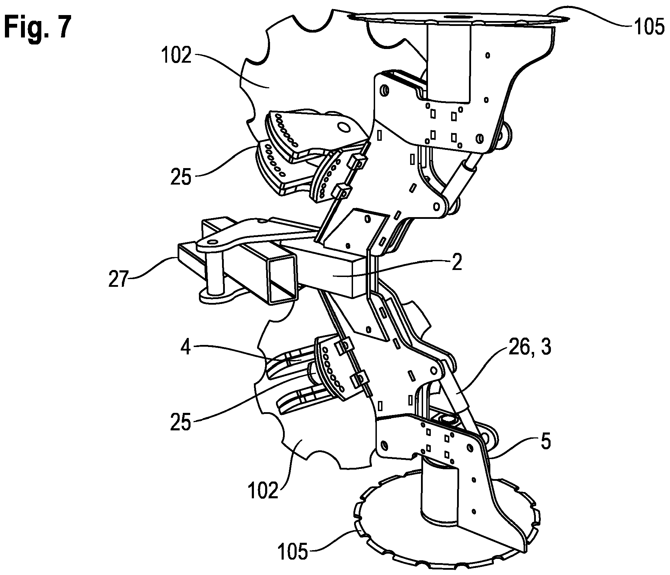

Fig. 7 ist eine Darstellung des Ausführungsbeispiels gemäß Fig. 6 in einer etwas anderen Perspektive, in welcher der Stellaktuator 26.3 für die Verstellung des Anschnittwinkels des zweiten Schneidelementes 105 sowie die Lochplatte 25 jeweils deutlich erkennbar sind. Der übrige Aufbau entspricht dem gemäß Fig. 6.

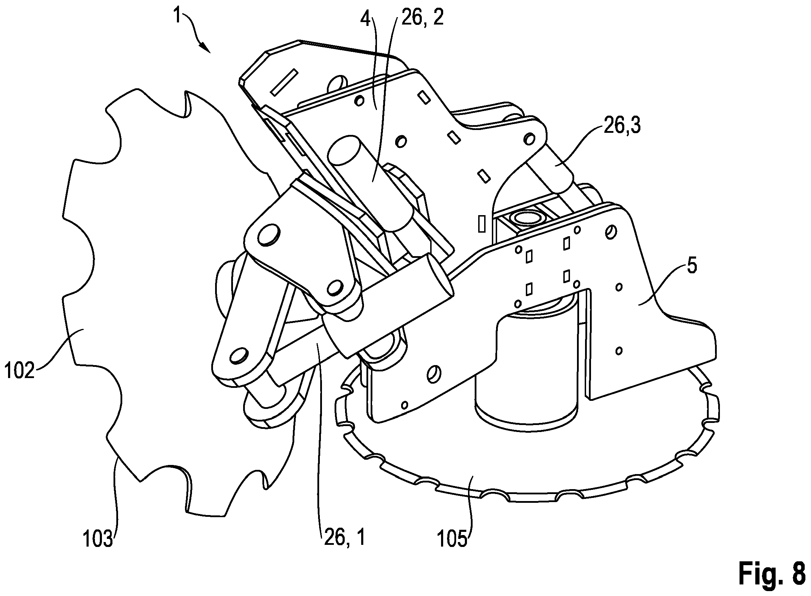

In Fig. 8 ist ein Ausführungsbeispiel eines Pflugmoduls 1 dargestellt, das dem Grundaufbau gemäß Fig. 1 entspricht, wobei jedoch mittels hydraulischer Stellaktuatoren 26.1 und 26.2 eine Verstellmöglichkeit für das als Hohlscheibe ausgebildete erste Schneidelement 102 realisiert wird. Der Stellaktuator 26.1 dient dazu, den Anschnittwinkel des ersten Schneidelementes 102 stufenlos einzustellen, welche durch ein Verschwenken des ersten Schneidelementes 102 um eine Achse realisiert wird, welche im Wesentlichen senkrecht zum zu pflügenden Boden gerichtet ist. Ein zweiter Stellaktuator 26.2 ist vorgesehen, welcher ein Schwenken des ersten Schneidelementes 102 um eine Achse ermöglicht, welche im Wesentlichen in Pflügrichtung zeigt. Die Übertragung der jeweiligen Kräfte erfolgt mittels artikulierter Hebelglieder, welche dem Durchschnittsfachmann an sich bekannt sind und daher hier nicht näher erläutert werden müssen. Der sonstige Grundaufbau entspricht dem des erfindungsgemäßen Pflugmoduls 1, wie er ohne die Verstellbarkeit des ersten Scheibenelementes 102 in Fig. 1 bereits dargestellt und erläutert wurde.

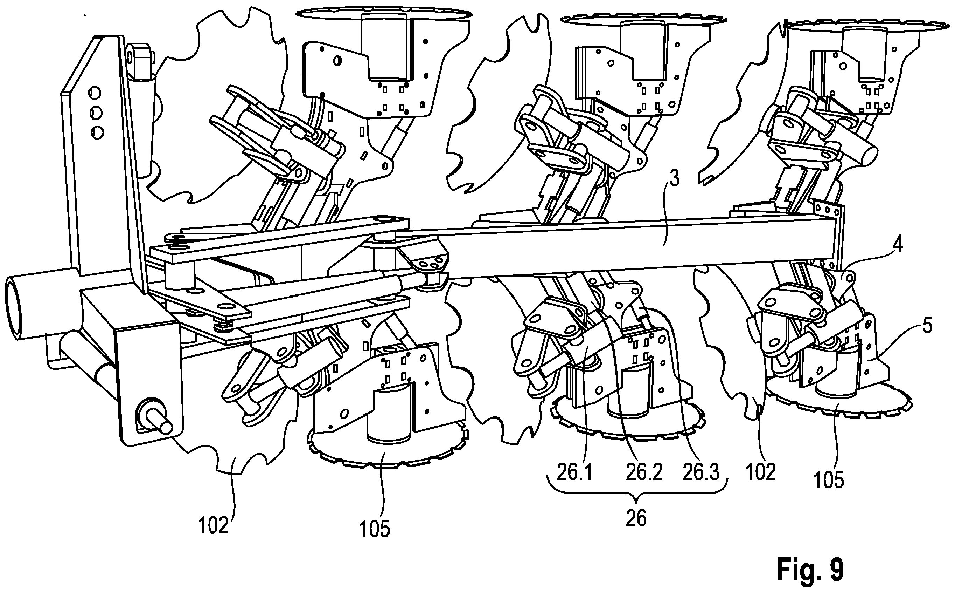

Der Vollständigkeit halber ist in Fig. 9 eine Pflugvorrichtung 2 mit sechs Pflugmodulen 1, jeweils drei an einer Seite des Grundgerüstes 3 bzw. des Pflugbaumes, mit dem ansonsten in Fig. 4 beschriebenen Grundaufbau dargestellt. Deutlich erkennbar sind die mit Stellaktuatoren 26 versehenen Pflugmodule 1, mittels welcher eine Doppelachsenverschwenkung des ersten Schneidelementes 102 und einer Einfachachsenverschwenkung des zweiten Schneidelementes 105 stufenlos möglich ist, da als Stellaktuatoren hydraulische Stellzylinder verwendet werden.

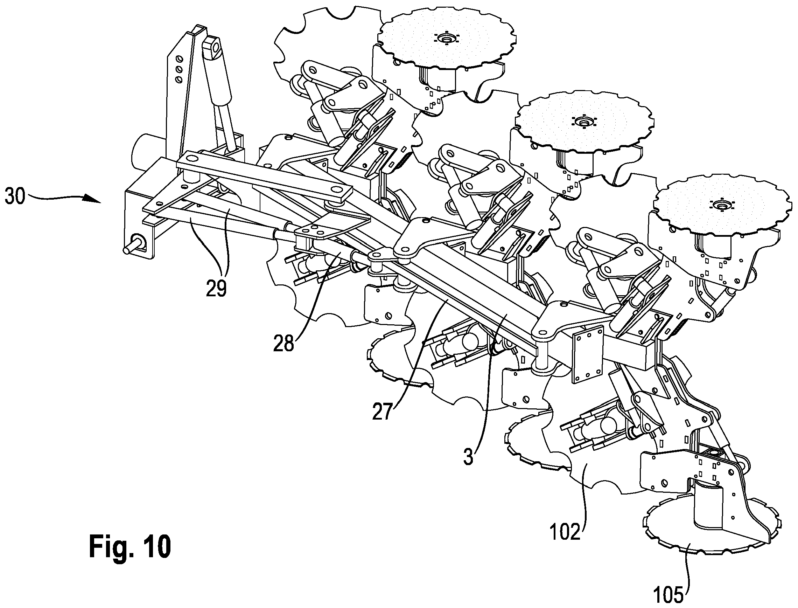

In Fig. 10 ist eine Pflugvorrichtung gezeigt, an welcher sechs Pflugmodule 1, und zwar je drei beidseitig des Pflugbaumes 3, angeordnet sind. Die jeweiligen Paare von Pflugmodulen 1 sind über Schwenkelemente in Form von etwa dreiecksförmigen Schwenkblechen fest mit einem Verbindungselement in Form einer Schubstange 27 verbunden. Bei Längsbewegung der Schubstange 27 können über die Schwenkbleche die Pflugmodule hinsichtlich ihrer Schnittbreite verstellt werden. Die entsprechende Bewegung der Schubstange 27 in Längsrichtung wird mittels eines dritten Hydraulikzylinders 28 bewirkt, so dass bei einer Stellbewegung des Stellzylinders 28 alle Hydraulikmodule synchron zueinander hinsichtlich ihrer Schnittbreite einstellbar sind. In an sich bekannter Weise wird die Schwenkung der erfindungsgemäßen Pflugvorrichtung relativ zu dem den Pflug ziehenden Traktor, wozu die Pflugvorrichtung an der Anbauseite 30 am Traktor befestigt ist, seitlich verstellt durch einen ersten und einen zweiten Stellzylinder 29. Es ist der dritte Stellzylinder 28, welcher die simultane Verstellung der Schnittbreite der Pflugvorrichtung mittels eines Stellzylinders 28, welcher mit der Schubstange 27 verbunden ist, bewirkt. Der sonstige grundsätzliche Aufbau besteht aus dem ersten Schneidelement 102 und dem zweiten Schneidelement 105, welche zuvor beschrieben worden sind und daher deren Funktion und Anordnung hier nicht nochmals erläutert werden.

Die übrige Funktion und der übrige Aufbau der Pflugmodule 1 wie auch die gesamte Pflugvorrichtung sind zuvor bereits beschrieben worden und werden daher hier nicht wiederholt.

### Bezugszeichenliste

- 1: Pflugmodul
- 2: Pflugvorrichtung
- 3: Grundgerüst/ Pflugbaum
- 4: erste Trägerstruktur
- 5: zweite Trägerstruktur
- 6: Schneidmesser
- 7: Gelenk
- 8: erster Balken
- 9: zweiter Balken
- 10: Aussparung
- 11: Aussparung
- 12: Doppelpfeil
- 13: Scheibensech
- 14: Furche
- 15: Hydraulikzylinder / Spindel
- 16: Scheibe
- 17: Pfeil
- 18: Gelenk
- 19: Gelenk
- 20: erstes Kopplungsteil
- 21: zweites Kopplungsteil
- 22: Schwenkarm
- 23: Schlitten
- 24: Pflugkörper
- 25: Lochplatte
- 26: Stellaktuatoren:
- 26.1: Stellaktuator erstes Schneidelement Anschnittwinkel
- 26.2: Stellaktuator erstes Schneidelement Schwenkwinkel
- 26.3: Stellaktuator zweites Schneidelement Anstellwinkel
- 27: Schubstange
- 28: 3. Stellzylinder
- 29: 1. und 2. Stellzylinder
- 30: Anbauseite
- 102: erstes Schneidelement
- 103: erste Schneidkante
- 104: Schneidbereich erstes Schneidelement
- 105: zweites Schneidelement
- 106: zweite Schneidkante
- 107: Schneidbereich zweites Schneidelement
- 108: Drehachse erstes Schneidelement
- 109: Drehachse zweites Schneidelement
- 110: Pflügrichtung
- 113: Schneidfläche
- 120: Boden
- 121: Trennfläche / Furchensohle
- 201: Erdbalken
- 202: Seitenbereich
- 203: Bodenbereich

## Patentansprüche

1. Pflugmodul (1) zur auswechselbaren Montage an einem Grundgerüst (3) einer Pflugvorrichtung (2) zum Pflügen eines Bodens, wobei das Pflugmodul (1) aufweist:
- ein rotierbares, als Schneidteller ausgebildetes erstes Schneidelement (102) mit einer umlaufenden ersten Schneidkante (103), wobei das erste Schneidelement (102) derart ausgebildet ist, dass durch Bewegen des Pflugmoduls (1) auf dem Boden (120) entlang einer Pflügrichtung (110) ein Seitenbereich (202) eines Erdbalkens (201) des Bodens (120) schneidbar ist,
- ein zweites, ebenes Schneidelement (105) mit einer zweiten Schneidkante (106), wobei das zweite Schneidelement (105) derart ausgebildet ist, dass durch Bewegen des Pflugmoduls (1) auf dem Boden (120) entlang einer Pflügrichtung (110) ein Bodenbereich (203) eines Erdbalkens (201) des Bodens (120) abschneidbar ist, **dadurch gekennzeichnet,**
**dass** das Pflugmodul (1) als fertigmontierte Baueinheit derart ausgebildet ist, dass im montierten Zustand das zweite Schneidelement (105) in Pflügrichtung (110) mit seiner Schneidkante dem ersten Schneidelement (102) nachläuft und
- eine erste Trägerstruktur (4) das erste Schneidelement (102) und
- eine zweite Trägerstruktur (5) das zweite Schneidelement (105) trägt,
- die erste Trägerstruktur (4) und die zweite Trägerstruktur (5) miteinander verbunden sind,
- **dass** die erste Trägerstruktur (4) Mittel zur lösbaren Befestigung an einem Grundgerüst (3) einer Pflugvorrichtung (2) aufweist,
- wobei das erste Schneidelement (102) im montierten Zustand um eine in Richtung auf den zu pflügenden Boden verlaufende Achse schwenkbar bezüglich seines Anschnittwinkels und/oder um eine in Pflügrichtung verlaufende Achse schwenkbar bezüglich seines Schwenkwinkels einstellbar ist.

2. Pflugmodul nach Anspruch 1, **dadurch gekennzeichnet, dass** die zweite Trägerstruktur (5) über ein Gelenk (7) schwenkbar mit der ersten Trägerstruktur (4) verbunden und der Winkel zwischen beiden Trägerstrukturen einstellbar ist.

3. Pflugmodul nach Anspruch 1 oder 2, **dadurch gekennzeichnet, dass** das erste Schneidelement (102) derart verschieblich an der ersten Trägerstruktur (4) angeordnet ist, dass der Abstand zwischen der ersten Schneidkante (103) des ersten Schneidelements (102) und der zweiten Schneidkante (106) des zweiten Schneidelements (105) einstellbar ist.

4. Pflugmodul nach einem der Ansprüche 1 bis 3, **dadurch gekennzeichnet, dass** der Anschnittwinkel des ersten Schneidelementes (102) stufenlos einstellbar ist.

5. Pflugmodul nach einem der Ansprüche 1 bis 4, **dadurch gekennzeichnet, dass** der Schwenkwinkel des ersten Schneidelementes (102) stufenlos einstellbar ist.

6. Pflugmodul nach Anspruch 4 oder 5, **dadurch gekennzeichnet, dass** der Anschnittwinkel und der Schwenkwinkel mittels hydraulisch oder elektrisch antreibbarer Stellglieder einstellbar verstellbar sind.

7. Pflugmodul nach einem der Ansprüche 1 bis 3, **dadurch gekennzeichnet, dass** der Anschnittwinkel des ersten Schneidelements (102) stufenweise mittels einer Lochplatte (25) mit definierten Lochabständen einstellbar verstellbar ist.

8. Pflugmodul nach einem der Ansprüche 1 bis 4, **dadurch gekennzeichnet, dass** der Schwenkwinkel des ersten Schneidelementes (102) stufenweise mittels einer Lochplatte (25) mit definierten Lochabständen einstellbar verstellbar ist.

9. Pflugmodul (1) nach einem der Ansprüche 1 bis 8, **dadurch gekennzeichnet, dass** das zweite Schneidelement (105) um eine quer zur Pflügrichtung verlaufende Achse einstellbar verschwenkbar ist.

10. Pflugmodul (1) nach einem der Ansprüche 1 bis 9, **dadurch gekennzeichnet, dass** ein erster Schneidbereich (104) innerhalb einer ersten Schneidebene und ein zweiter Schneidbereich (107) in einer zweiten Schneidebene ausgebildet sind, wobei die erste Schneidebene und die zweite Schneidebene zueinander einen Winkel von 30° bis 135°, insbesondere bis 110°, ausbilden.

11. Pflugmodul (1) nach einem der Ansprüche 1 bis 10, **dadurch gekennzeichnet, dass** das erste Schneidelement (102) bombiert ist oder eine Kegelform oder eine Kegelstumpfform aufweist.

12. Pflugmodul (1) nach einem der Ansprüche 1 bis 11, **dadurch gekennzeichnet, dass** die erste Schneidkante (103) des ersten Schneidelements (102) und/oder die zweite Schneidkante (106) des zweiten, scheibenförmigen Schneidelements (105) am Umfang Aussparungen (10, 11) aufweisen.

13. Pflugmodul (1) nach einem der Ansprüche 1 bis 12, **dadurch gekennzeichnet, dass** das zweite Schneidelement (105) ein rotierbares Schneidelement ist und die zweite Schneidkante (106) eine umlaufende Schneidkante (106) ist.

14. Pflugmodul (1) nach einem der Ansprüche 1 bis 13, **dadurch gekennzeichnet, dass** das zweite Schneidelement (105) ein feststehendes Schneidmesser (6) ist.

15. Pflugmodul (1) nach einem der Ansprüche 1 bis 14 **dadurch gekennzeichnet, dass** das Schneidmesser (6) des zweiten Schneidelements (105) L-förmig ausgebildet ist, wobei ein erster Balken (8) des Schneidmessers (6) in Arbeitsstellung des Pflugmoduls (1) horizontal ausgerichtet ist und ein zweiter Balken (9) im Wesentlichen senkrecht hierzu ausgerichtet ist.

16. Pflugmodul (1) nach Anspruch 15, **dadurch gekennzeichnet, dass** das Schneidmesser (6) einstückig ausgebildet ist.

17. Pflugvorrichtung (2) mit einem Grundgerüst (3), **dadurch gekennzeichnet, dass** am Grundgerüst (3) der Pflugvorrichtung (2) mindestens ein Pflugmodul (1) gemäß einem der voranstehenden Ansprüche 1 bis 16 angeordnet ist.

18. Pflugvorrichtung (2) nach Anspruch 17, **dadurch gekennzeichnet, dass** zumindest zwei Pflugmodule (1) am Grundgerüst (3) angeordnet sind, dessen erste Trägerstruktur (4) eines ersten Schneidelements (102) und zweite Trägerstruktur (5) eines zweiten Schneidelements (105) mit einem Verbindungselement verbunden sind, welches bezüglich des Grundgerüstes (3) so verstellbar ist, dass die Pflugmodule (1) in Breitenrichtung der Pflugvorrichtung (2) zueinander einstellbar verstellbar sind.

19. Pflugvorrichtung (2) nach Anspruch 17 oder 18, **dadurch gekennzeichnet, dass** das Verbindungselement eine Schubstange (27) ist.

20. Pflugvorrichtung (2) nach Anspruch 19, **dadurch gekennzeichnet, dass** die Schubstange (27) hydraulisch oder elektrisch antreibbar verstellbar ist.

## Claims

1. Plough module (1) for interchangeable mounting on a base frame (3) of a ploughing device (2) for ploughing a soil, the plough module (1) having
- a rotatable first cutting element (102) designed as a cutting plate with a circumferential first cutting edge (103), wherein the first cutting element (102) is designed such that a side region (202) of a soil bar (201) of the soil (120) is cut by moving the plough module (1) on the soil (120) along a ploughing direction (110),
- a second, flat cutting element (105) with a second cutting edge (106), the second cutting element (105) being designed in such a way that a bottom region (203) of an earth bar (201) of the ground (120) is cut off by moving the plough module (1) on the ground (120) along a ploughing direction (110),
**characterized in**
**that** the plough module (1) is designed as a fully assembled unit in such a way that, in the assembled state, the second cutting element (105) follows the first cutting element (102) with its cutting edge in the ploughing direction (110), and
- a first support structure (4) supports the first cutting element (102) and
- a second support structure (5) supports the second cutting element (105),
- the first support structure (4) and the second support structure (5) are connected to one another,
- **that** the first support structure (4) comprises means for detachable attachment to a base frame (3) of a ploughing device (2),
- wherein the first cutting element (102) is pivotable in the assembled state about an axis extending in the direction of the ground to be plowed with respect to its cutting angle and/or is pivotable about an axis extending in the direction of plowing with respect to its pivoting angle.

2. Plough module according to claim 1, **characterized in that** the second support structure (5) is pivotably connected to the first support structure (4) via a joint (7) and the angle between the two support structures is adjustable.

3. Plough module according to claim 1 or 2, **characterized in that** the first cutting element (102) is arranged displaceably on the first support structure (4) in such a way that the distance between the first cutting edge (103) of the first cutting element (102) and the second cutting edge (106) of the second cutting element (105) is adjustable.

4. Plough module according to any one of claims 1 to 3, **characterized in that** the cutting angle of the first cutting element (102) is continuously adjustable.

5. Plough module according to one of claims 1 to 4, **characterized in that** the pivoting angle of the first cutting element (102) is continuously adjustable.

6. Plough module according to claim 4 or 5, **characterized in that** the cutting angle and the pivoting angle are adjustable by means of hydraulically or electrically driven actuators.

7. Plough module according to any one of claims 1 to 3, **characterized in that** the cutting angle of the first cutting element (102) is adjustable stepwise by means of a perforated plate (25) with defined hole spacings.

8. Plough module according to any one of claims 1 to 4, **characterized in that** the pivoting angle of the first cutting element (102) is adjustable stepwise by means of a perforated plate (25) with defined hole spacings.

9. Plough module (1) according to any one of claims 1 to 8, **characterized in that** the second cutting element (105) is adjustably pivotable about an axis running transversely to the ploughing direction.

10. Plough module (1) according to any one of claims 1 to 9, **characterized in that** a first cutting region (104) is formed within a first cutting plane and a second cutting region (107) is formed in a second cutting plane, the first cutting plane and the second cutting plane forming an angle of 30° to 135°, in particular up to 110°, to one another.

11. Plough module (1) according to any one of claims 1 to 10, **characterized in that** the first cutting element (102) is cambered or has a conical shape or a truncated cone shape.

12. Plough module (1) according to any one of claims 1 to 11, **characterized in that** the first cutting edge (103) of the first cutting element (102) and/or the second cutting edge (106) of the second, disc-shaped cutting element (105) comprise recesses (10, 11) on the circumference.

13. Plough module (1) according to any one of claims 1 to 12, **characterized in that** the second cutting element (105) is a rotatable cutting element and the second cutting edge (106) is a circumferential cutting edge (106).

14. Plough module (1) according to any one of claims 1 to 13, **characterized in that** the second cutting element (105) is a stationary cutting blade (6).

15. Plough module (1) according to any one of claims 1 to 14, **characterized in that** the cutting blade (6) of the second cutting element (105) is L-shaped, a first bar (8) of the cutting blade (6) being aligned horizontally in the working position of the plough module (1) and a second bar (9) being aligned essentially perpendicularly thereto.

16. Plough module (1) according to claim 15, **characterized in that** the cutting blade (6) is formed in one piece.

17. Ploughing device (2) comprising a base frame (3), **characterized in that** at least one ploughing module (1) according to any one of the preceding claims 1 to 16 is arranged on the base frame (3) of the ploughing device (2).

18. Ploughing device (2) according to claim 17, **characterized in that** at least two ploughing modules (1) are arranged on the base frame (3), the first support structure (4) of a first cutting element (102) and the second support structure (5) of a second cutting element (105) of which are connected to a connecting element which is adjustable with respect to the base frame (3) in such a way that the ploughing modules (1) are adjustable relative to one another in width direction of the ploughing device (2).

19. Ploughing device (2) according to claim 17 or 18, **characterized in that** the connecting element is a push rod (27).

20. Ploughing device (2) according to claim 19, **characterized in that** the push rod (27) is hydraulically or electrically drivably adjustable.

## Revendications

1. Module de labourage (1) pour le montage interchangeable sur une structure de base (3) d'un dispositif de labourage (2) pour labourer un sol, le module de labourage (1) présentant :
- un premier élément de coupe (102) rotatif, réalisé sous forme de plateau de coupe, avec une première arête de coupe (103) périphérique, le premier élément de coupe (102) étant réalisé de telle sorte qu'en déplaçant le module de labourage (1) sur le sol (120) le long d'une direction de labourage (110), une zone latérale (202) d'une barre de terre (201) du sol (120) peut être coupée,
- un deuxième élément de coupe (105) plan avec une deuxième arête de coupe (106), le deuxième élément de coupe (105) étant réalisé de telle sorte qu'en déplaçant le module de labourage (1) sur le sol (120) le long d'une direction de labourage (110), une zone de sol (203) d'une barre de terre (201) du sol (120) peut être découpée,
**caractérisé en ce que**
le module de labourage (1) est réalisé sous forme d'unité de construction entièrement montée de telle sorte, qu'à l'état monté, le deuxième élément de coupe (105) suit le premier élément de coupe (102) avec son arête de coupe dans la direction de labourage (110) et
- une première structure de support (4) porte le premier élément de coupe (102) et
- une deuxième structure de support (5) porte le deuxième élément de coupe (105),
- la première structure de support (4) et la deuxième structure de support (5) sont reliées entre elles,
- **en ce que** la première structure de support (4) présente des moyens pour la fixation amovible à une structure de base (3) d'un dispositif de labourage (2),
- le premier élément de coupe (102) pouvant être réglé, à l'état monté, de manière à pouvoir pivoter autour d'un axe s'étendant en direction du sol à labourer en ce qui concerne son angle d'attaque et/ou de manière à pouvoir pivoter autour d'un axe s'étendant en direction de labourage en ce qui concerne son angle de pivotement.

2. Module de labourage selon la revendication 1, **caractérisé en ce que** la deuxième structure de support (5) est reliée de manière pivotante à la première structure de support (4) par l'intermédiaire d'une articulation (7) et l'angle entre les deux structures de support est réglable.

3. Module de labourage selon la revendication 1 ou 2, **caractérisé en ce que** le premier élément de coupe (102) est agencé de manière coulissante sur la première structure de support (4) de telle sorte que la distance entre la première arête de coupe (103) du premier élément de coupe (102) et la deuxième arête de coupe (106) du deuxième élément de coupe (105) est réglable.

4. Module de labourage selon l'une quelconque des revendications 1 à 3, **caractérisé en ce que** l'angle d'attaque du premier élément de coupe (102) est réglable en continu.

5. Module de labourage selon l'une quelconque des revendications 1 à 4, **caractérisé en ce que** l'angle de pivotement du premier élément de coupe (102) est réglable en continu.

6. Module de labourage selon la revendication 4 ou 5, **caractérisé en ce que** l'angle d'attaque et l'angle de pivotement sont réglables au moyen d'actionneurs à entraînement hydraulique ou électrique.

7. Module de labourage selon l'une quelconque des revendications 1 à 3, **caractérisé en ce que** l'angle d'attaque du premier élément de coupe (102) est réglable par paliers au moyen d'une plaque perforée (25) avec des intervalles de trous définis.

8. Module de labourage selon l'une quelconque des revendications 1 à 4, **caractérisé en ce que** l'angle de pivotement du premier élément de coupe (102) est réglable par paliers au moyen d'une plaque perforée (25) avec des intervalles de trous définis.

9. Module de labourage (1) selon l'une quelconque des revendications 1 à 8, **caractérisé en ce que** le deuxième élément de coupe (105) peut être pivoté de manière réglable autour d'un axe s'étendant transversalement à la direction de labourage.

10. Module de labourage (1) selon l'une quelconque des revendications 1 à 9, **caractérisé en ce qu'**une première zone de coupe (104) est réalisée à l'intérieur d'un premier plan de coupe et une deuxième zone de coupe (107) est réalisée dans un deuxième plan de coupe, le premier plan de coupe et le deuxième plan de coupe réalisant entre eux un angle de 30° à 135°, notamment de jusqu'à 110°.

11. Module de labourage (1) selon l'une quelconque des revendications 1 à 10, **caractérisé en ce que** le premier élément de coupe (102) est bombé ou présente une forme conique ou une forme tronconique.

12. Module de labourage (1) selon l'une quelconque des revendications 1 à 11, **caractérisé en ce que** la première arête de coupe (103) du premier élément de coupe (102) et/ou la deuxième arête de coupe (106) du deuxième élément de coupe (105) en forme de disque présentent des évidements (10, 11) sur le pourtour.

13. Module de labourage (1) selon l'une quelconque des revendications 1 à 12, **caractérisé en ce que** le deuxième élément de coupe (105) est un élément de coupe rotatif et la deuxième arête de coupe (106) est une arête de coupe périphérique (106).

14. Module de labourage (1) selon l'une quelconque des revendications 1 à 13, **caractérisé en ce que** le deuxième élément de coupe (105) est une lame de coupe fixe (6).

15. Module de labourage (1) selon l'une quelconque des revendications 1 à 14, **caractérisé en ce que** la lame de coupe (6) du deuxième élément de coupe (105) est réalisée en forme de L, une première barre (8) de la lame de coupe (6) étant orientée horizontalement en position de travail du module de labourage (1) et une deuxième barre (9) étant orientée essentiellement perpendiculairement à celle-ci.

16. Module de labourage (1) selon la revendication 15, **caractérisé en ce que** la lame de coupe (6) est réalisée d'une seule pièce.

17. Dispositif de labourage (2) avec une structure de base (3), **caractérisé en ce qu'**au moins un module de labourage (1) selon l'une quelconque des revendications 1 à 16 précédentes est agencé sur la structure de base (3) du dispositif de labourage (2).

18. Dispositif de labourage (2) selon la revendication 17, **caractérisé en ce qu'**au moins deux modules de labourage (1) sont agencés sur la structure de base (3), dont la première structure de support (4) d'un premier élément de coupe (102) et la deuxième structure de support (5) d'un deuxième élément de coupe (105) sont reliées à un élément de liaison, qui est réglable par rapport à la structure de base (3) de telle sorte que les modules de labourage (1) peuvent être réglés l'un par rapport à l'autre dans la direction de la largeur du dispositif de labourage (2).

19. Dispositif de labourage (2) selon la revendication 17 ou 18, **caractérisé en ce que** l'élément de liaison est une tige de poussée (27).

20. Dispositif de labourage (2) selon la revendication 19, **caractérisé en ce que** la tige de poussée (27) est réglable par entraînement hydraulique ou électrique.
